# EUROPEAN PATENT SPECIFICATION

(11) **EP 3 396 358 B1**
(45) Date of publication and mention of the grant of the patent: **15.05.2024**
(21) Application number: 16878176.3
(22) Date of filing: 09.11.2016
(51) Int. Cl.: G01N 21/88, G06T 7/00

(54) **INFORMATION PROCESSING DEVICE AND INFORMATION PROCESSING METHOD**
INFORMATIONSVERARBEITUNGSVORRICHTUNG UND INFORMATIONSVERARBEITUNGSVERFAHREN
DISPOSITIF DE TRAITEMENT D'INFORMATIONS ET PROCÉDÉ DE TRAITEMENT D'INFORMATIONS

(30) Priority: 25.12.2015 JP 2015254975
(43) Date of publication of application: 31.10.2018
(73) Proprietor: FUJIFILM Corporation, Tokyo 106-8620 (JP)
(72) Inventor: KARUBE, Mikihiko, Tokyo 107-0052 (JP)
(74) Representative: Klunker IP Patentanwälte PartG mbB
(86) International application number: PCT/JP2016/083190
(87) International publication number: WO 2017/110278

(56) References cited:
- JP-A- H01 182 714
- JP-A- H01 322 069
- JP-A- 2000 028 541
- JP-A- 2002 257 744
- JP-A- 2003 035 528
- JP-A- 2005 062 041
- JP-A- 2005 180 164
- JP-A- 2008 291 440
- JP-A- 2010 121 992
- JP-A- 2015 138 467
- R.S. ADHIKARI ET AL: "Image-based retrieval of concrete crack properties for bridge inspection", AUTOMATION IN CONSTRUCTION, vol. 39, 1 April 2014 (2014-04-01), pages 180-194, XP055308376, AMSTERDAM, NL ISSN: 0926-5805, DOI: 10.1016/j.autcon.2013.06.011

## Description

### BACKGROUND OF THE INVENTION

### 1. Field of the Invention

The present invention relates to an information processing device and an information processing method for performing information processing for analyzing damage information generated on the basis of an image of a structure that is an inspection target to acquire a progress speed of the damage.

### 2. Description of the Related Art

There are various structures such as bridges, roads, tunnels, dams, buildings, or the like as a social infrastructure. Since damage occurs in the structures and their damage progresses with the lapse of time, performing inspection of the structure at a predetermined frequency is required. For example, in the case of a road bridge, it is mandatory to perform periodic inspection at a frequency of once every five years. The regular bridge inspection procedure published by Road station of the Ministry of Land, Infrastructure and Transport shows, as a standard maintenance and management flow, work on periodic inspection of road bridges is performed in an order of a maintenance and management plan such as an inspection plan, close visual inspection, recognition of a damaged state, a determination of measure classification, diagnosis of soundness, and repair.

In recent years, support for maintaining and managing structures is performed by a computer device.

JP2008-291440A describes calculating a deterioration curve showing a change (degree of deterioration) of a determination classification with respect to elapsed years using a computer device in a case where a visual check is performed by an inspector and evaluation of determination classification of damage is performed for each part of a bridge. In JP2008-291440A, five stages including OK: "No damage is recognized from an inspection result", I: "Damage is recognized and it is necessary to record a degree of the damage", II: "Damage is recognized and it is necessary to perform follow-up investigation", III: "Damage is large and it is necessary to perform a detailed inspection and examine whether repair is required", IV: "There is concern that damage is severe and guarantee of traffic security interferes" are described as examples of the determination classification of the damage by an inspector.

JP2015-138467A describes regarding cracks generated in a concrete structure as a set of line segments by performing image processing on a captured image of the structure using a computer device, recording end points of the line segments as coordinates in text data, and analyzing measurement information of the cracks in time series to calculate a life cycle cost of the concrete structure. As the measurement information of cracks, a position, a length, and a width of cracks are used.

JP2009-133085A describes extracting cracks from a captured image of a tunnel inner wall, extracting a difference between a current captured image and a previous captured image or a standard image, executing a vectorization process to convert an area, a length, a curvature, or the like of cracks into numerical values and represent the numerical values as a graph, and thereby determining a degree of progress of cracks using a computer device.

JP2015-34428A discloses imaging a bridge from an airborne mobile device and comparing captured data with five stages of deterioration tendency data accumulated in a database to determine which of deterioration levels the bridge corresponds to using a computer device. JP2015-34428A describes a latent phase: "an image showing cracks in a direction perpendicular to a bridge axis", a development phase: "an image showing cracks in an orthogonal direction", an early stage of acceleration phase: "an image showing tortoiseshell cracks", a late stage of acceleration phase: "an image showing a slit of corner fall and cracks", and a deterioration phase: "an image showing a missing part" as examples of deterioration tendency data.

JP2005-17157A discloses predicting a rebar corrosion probability which is a probability of rebars of a predetermined rank being corroded, using a model representing a rebar corrosion mechanism using a computer device.

R.S. Adhikari et al. "Image-based retrieval of concrete crack properties for bridge inspection" discloses a damage extraction unit for extracting damage from an image of an inspection target structure. Damage information including a vector obtained by vectorizing the damage is obtained. Using information about a damaged state of a model structure and a degree of damage a progress model indicating a correspondence relationship and a degree of damage of the target structure is acquired. On the basis of the progress model the vector and the damage information of the target structure is analyzed so as to obtain a degree of damage of the target structure. The degree of damage of the target structure is stored in a database.
JP 2008 291440 A as well as JP 2015 138467 A disclose a method for predicting the progress of a damage of a structure based on a plurality of previous inspection. Specifically, for each of plural time intervals an average deterioration degree is obtained. No damage information similar to damage information of an inspection target is provided.

### SUMMARY OF THE INVENTION

Inspection of a structure that is a social infrastructure is required to be performed by an engineer with expertise and practical experience regarding the structure or the inspection. For example, in the case of a road bridge, the inspection is required to be performed by an engineer who has any of "considerable qualifications or considerable practical experience for a road bridge", "considerable expertise regarding designing, construction, and management of a road bridges", and "considerable technique and practical experience regarding inspection of a road bridge".

On the other hand, as a result of continued construction of structures over the years, aging of a large number of structures and shortage of skilled engineers have become problems. That is, the number of skilled engineers is insufficient for the number of structures that are inspection targets. Therefore, in reality, an engineer with considerable expertise and practical experience necessary for inspecting structures, who is not a skilled engineer with "abundant expertise and long-time practical experience", is required to be able to appropriately recognize a damaged state and appropriately report the damaged state, like the skilled engineer.

Further, various types of structures have been constructed due to diversification of materials and structures of structures. It is difficult for even an engineer with a long practical experience to appropriately evaluate damage progressing according to an unknown damage progress mechanism that the engineer does not know in a case where there is the unknown damage progress mechanism. However, the engineer is required to appropriately recognize and report a damaged state as in a case where a known engineer inspects the damage progress mechanism.

In the technology described in JP2008-291440A, since the five stages of determination classifications are evaluated by the inspector, the determination classifications are likely to be different from each other between a determination of a skilled person and a determination of an unskilled person even in the same degree of damaged state. Also, in a case of a damage that has progressed according to a mechanism unknown to the inspector, the damage is likely to be actually evaluated as mild even in a severe situation. An inappropriate deterioration curve is calculated in a case where damage evaluation is inappropriate.

In the technology described in JP2015-138467A, a life cycle cost of the structure is calculated by analyzing the measurement information (a position, a length, a width, or the like) of the cracks in time series, and information indicating a mechanism of damage progress is not used. That is, since the information indicating the damage progress mechanism is not used, recognition of the damaged state is likely to be inappropriate even in a case where the measurement information is correct. For example, cracks may be important cracks that cannot be overlooked even in a case where a width thereof is small. However, in a case where an engineer does not have knowledge and experience about how to specifically handle and evaluate all of measurement information including the position, the length, and the width of the cracks, important cracks will be overlooked, for example, in a case where the damage is evaluated using the "width".

In the technology described in JP2009-133085A, a degree of progress of cracks is determined by analyzing the measurement information (the area, the length, the curvature, or the like) of cracks in time series, but information indicating the damage progress mechanism is not used. That is, since the information indicating the damage progress mechanism is not used, damage evaluation is likely to be inappropriate even in a case where the measurement information is correct.

Further, damage of the structure progresses with the lapse of time, but in a case where an interval between periodic inspections increases, an appropriate damage evaluation result may not be obtained depending on the nature of the damage.

In the technology disclosed in JP2015-34428A, a determination is made as to which of deterioration levels the bridge corresponds to by comparing imaging data of the bridge with five stages of deterioration tendency data, but the comparison is not performed with a vector of damage. That is, since an image (which is raster data) that can be compared with a captured image is merely used as deterioration tendency data, and damage evaluation is not performed using a vector, there is a limit to accuracy of evaluation of the deterioration level.

In the technology described in JP2005-17157A, although a probability of rebar corrosion is predicted using a model representing a rebar corrosion mechanism, there is a limit to prediction accuracy of the rebar corrosion probability unless damage evaluation is not performed using a vector.

As described above, the damage of the structure tends to progress with the elapse of time and progresses according to a damage progress mechanism specific to the damage, but since information processing in which damage analysis using a vector and damage analysis based on information indicating a damage progress mechanism are meaningfully combined is not performed, inappropriate recognition of a damaged state is likely to be performed in a case where inspection is performed by an unskilled person or inspection regarding damage progressing with a mechanism unknown to an inspector is performed.

The present invention has been made in view of the above circumstances, and an object of the present invention is to provide an information processing device and an information processing method capable of appropriately recognizing a state of damage progressing over time in order to support maintenance and management of a structure and enabling prediction of progress of a damaged state.

In order to achieve the above object, an information processing device according to a first aspect of the present invention comprises the features of claim 1.

Therefore, it is possible to appropriately recognize the damaged state and predict the progress of the damaged state.

Preferred embodiments are defined by the dependent claims. According to claim 2, since the inspection result information of another structure having the damage progress parameter that is the same as or similar to that of the inspection target structure is searched for and the progress model is generated, it is possible to obtain the degree of damage and the damage progress speed on the basis of the progress model (including a progress model showing an unknown damage progress mechanism) not stored in the database.

It is possible to use the damage progress speed, the damage information, and the degree of damage associated with each other.

Even in a case where the degree of damage of the inspection target structure is not present in the database, it is possible to use the damage progress speed and degree of damage associated with the similar damage information.

According to claim 9, since the progress model is subdivided on the basis of at least the vector in the damage information of the inspection target structure, it is possible to acquire an appropriate progress model subdivided to correspond to a damage progress mechanism in the inspection target structure. It is more preferable to subdivide the progress model also on the basis of the hierarchical structure information.

An information processing method according to the present invention comprises the steps of claim 10.

### BRIEF DESCRIPTION OF THE DRAWINGS

Fig. 1 is a perspective view illustrating a structure of a bridge which is an example of a structure.
Fig. 2 is a block diagram illustrating a configuration example of a structure maintenance and management system including a computer device which is an example of the information processing device of a first embodiment.
Fig. 3 is a block diagram illustrating an internal configuration example of a damage information generation unit.
Fig. 4 is a diagram schematically illustrating an example of a progress model.
Fig. 5 is a diagram schematically illustrating another example of the progress model.
Fig. 6 is a schematic flowchart illustrating a flow of an example of maintenance and management of a structure.
Fig. 7 is a flowchart illustrating a flow of a process of an example in recognition of a damaged state.
Fig. 8 is a flowchart illustrating details of generation of damage information.
Fig. 9 is a flowchart illustrating a flow of a process of another example in recognition of a damaged state.
Fig. 10 is an illustrative diagram that is used for description of a data configuration example of a database in a second embodiment.
Fig. 11 is a block diagram illustrating a configuration example of a structure maintenance and management system including a computer device which is an example of an information processing device of the second embodiment.
Fig. 12 is a block diagram illustrating a configuration example of a structure maintenance and management system including a computer device which is an example of an information processing device of a third embodiment.
Fig. 13 is an illustrative diagram that is used for description of subdivision of a progress model in a third embodiment.
Fig. 14 is an illustrative diagram that is used for description of a variation in acquisition of damage progress speed.
Fig. 15 is a diagram illustrating a state in which a plurality of damage vectors are generated by dividing curved damage.
Fig. 16 is a diagram illustrating a state in which a start point of a damage vector is determined.
Fig. 17 is another diagram illustrating a state in which a start point of a damage vector is determined.
Fig. 18 is a diagram illustrating a connection of separated damage vectors.
Fig. 19 is another diagram illustrating a connection of separated damage vectors.
Fig. 20 is a table showing image information included in hierarchical structure information.
Fig. 21 is a diagram illustrating an example of damage vector information included in the hierarchical structure information (corresponding to Example 1 of a hierarchy determination scheme).
Fig. 22 is a diagram illustrating Example 1 of a hierarchy determination scheme for a damage vector.
Fig. 23 is a diagram illustrating Example 2 of the hierarchy determination scheme for a damage vector.
Fig. 24 is a table showing an example of hierarchical structure information corresponding to Example 2 of the hierarchy determination scheme.
Fig. 25 is a diagram illustrating Example 3 of the hierarchy determination scheme for a damage vector.
Fig. 26 is another diagram illustrating Example 3 of a hierarchy determination scheme for a damage vector, and is a diagram illustrating an image captured later in time than in Fig. 25.
Fig. 27 is still another diagram illustrating Example 3 of the hierarchy determination scheme for a damage vector, and is a diagram illustrating an image captured later in time than in Fig. 26.
Fig. 28 is a table showing an example of hierarchical structure information corresponding to Example 3 of the hierarchy determination scheme.
Fig. 29 is a diagram illustrating Example 4 of the hierarchy determination scheme for a damage vector.
Fig. 30 is a table showing an example of hierarchical structure information corresponding to Example 4 of the hierarchy determination scheme.

### DESCRIPTION OF THE PREFERRED EMBODIMENTS

Hereinafter, preferred embodiments for carrying out the present invention will be described in detail with reference to the accompanying drawings.

### <Inspection Target Structure>

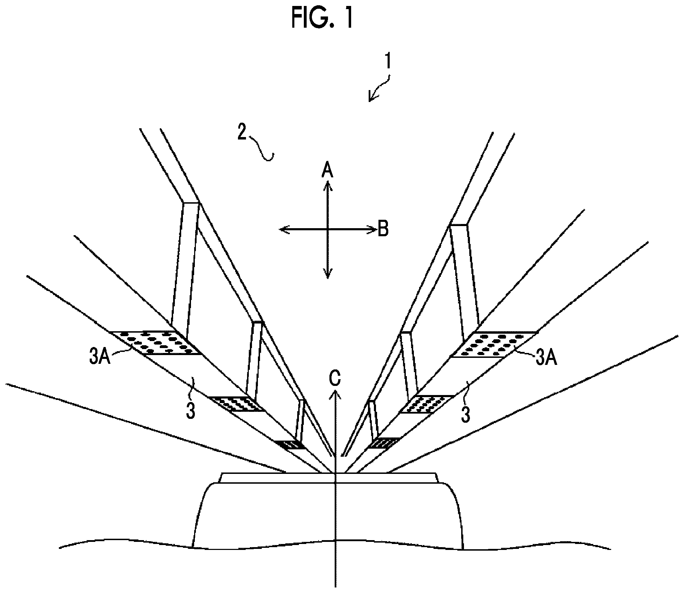

Fig. 1 is a perspective view illustrating a structure of a bridge 1 which is an example of a structure that is an inspection target to which an information processing device and an information processing method according to the present invention are applied. The bridge 1 (the structure) illustrated in Fig. 1 includes a main girder 3, and the main girder 3 is bonded to a joint 3A. The main girder 3 is a member that is passed between abutments or piers and supports a load of vehicles on a deck 2. The deck 2 on which vehicles travel is installed in an upper portion of the main girder 3. The deck 2 is assumed to be a deck made of general reinforced concrete. It should be noted that the bridge 1 includes members such as a transverse girder, a sway bracing, and a lateral bracing (not illustrated), in addition to the deck 2 and the main girder 3.

Although a structure that is an inspection target to which the present invention is applied (hereinafter also referred to as "inspection target structure") is a bridge in this example, the structure may be another structure of a type different from the bridge such as a road, a tunnel, a dam, a building. Also, the structure is not limited to an artificial structure, but may be a natural structure.

### <Acquisition of image>

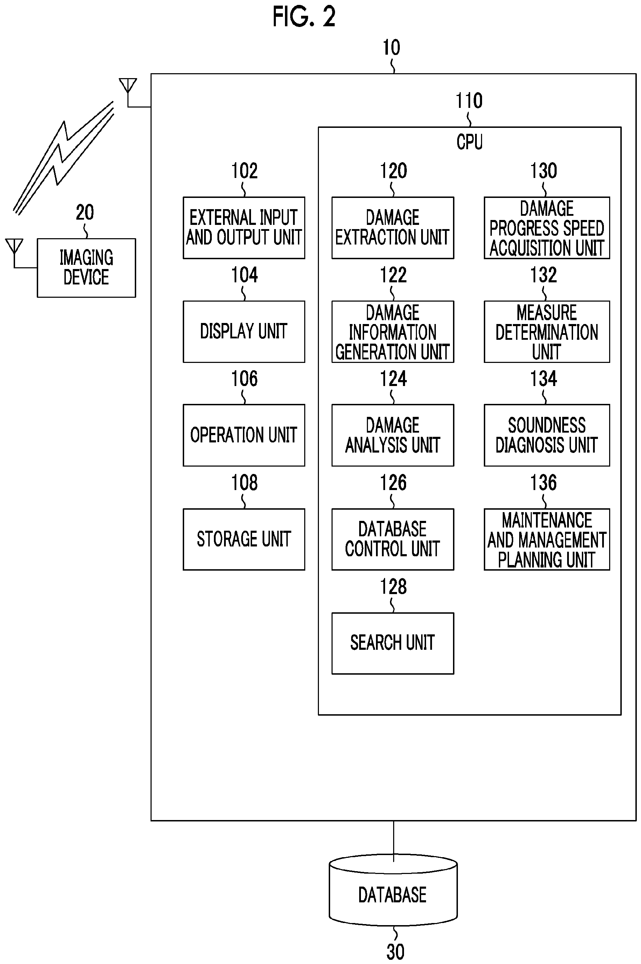

In a case where the bridge 1 is inspected, an inspector images the bridge 1 from the lower side (direction C in Fig. 1) using an imaging device 20 (see Fig. 2) and acquires a captured image for an inspection range. The imaging is performed while appropriately moving in an extending direction (a direction A in Fig. 1) of the bridge land a direction (a direction B in Fig. 1) orthogonal to the extending direction. It should be noted that in a case where it is difficult for the inspector to move due to a surrounding situation of the bridge 1, the imaging device 20 may be installed on a movable body that can move along the bridge 1 and imaging may be performed. Such a movable body may be provided with an elevation mechanism and a pan and tilt mechanism for the imaging device 20. Examples of the movable body include a vehicle, a robot, and a drone (a flying body), but are not limited thereto.

### [First Embodiment]

Fig. 2 is a block diagram illustrating a configuration example of a structure maintenance and management system including a computer device which is an example of a first embodiment of the information processing device according to the present invention.

The computer device 10 is an example of the information processing device according to the present invention, and acquires the captured image obtained by imaging the structure 1 with the imaging device 20 (for example, a digital camera), and generates damage information indicating a feature quantity of damage of the structure 1.

Further, the computer device 10 analyzes the damage information of the structure 1 obtained through the image processing and performs various types of information processing for supporting the maintenance and management (also referred to as "maintenance") of the structure 1.

For example, the computer device 10 analyzes the damage information of the structure 1 and performs information processing for acquiring a progress speed of the damage (hereinafter referred to as "damage progress speed"). That is, the computer device 10 has a progress speed acquisition function for acquiring the damage progress speed of the structure 1.

Examples of the computer device 10 include a personal computer, a tablet terminal, and a smartphone, but the present invention is not limited to these devices. The computer device 10 may be configured by the server device. Further, the computer device 10 may be configured of a plurality of devices.

The imaging device 20 has an imaging function. In a case where the computer device 10 is a mobile terminal, the imaging device 20 may be a digital camera built into the mobile terminal. For example, the imaging device 20 may be a digital camera built into a tablet terminal or a smartphone. The imaging device 20 may be a digital camera mounted on a robot or a drone.

A database 30 stores various types of information for supporting the maintenance and management of the structure 1. The database 30 may be built into the computer device 10.

The computer device 10 includes an external input and output unit 102 that performs input or output of various types of information to or from a device or a recording medium external to the computer device 10, a display unit 104 that performs a display of various types of information, an operation unit 106 that accepts an operation of a person, a storage unit 108 that stores various types of information, and a central processing unit (CPU) 110 that controls the entire computer device 10.

The external input and output unit 102 has a communication interface for wired communication or wireless communication or a contact type or non-contact type recording medium interface.

The external input and output unit 102 can input a captured image from the imaging device 20, the database 30, and the storage medium. A plurality of captured images are input according to the inspection range, and imaging date and time information are added to the captured image to be input by the imaging device 20. It should be noted that the imaging date and time is not necessarily the same in all the captured images at the same inspection time and may be over several days. A plurality of captured images may be collectively input, or one captured image may be input at a time. It should be noted that in the present invention, the "image" of the structure that is an inspection target may be a captured image in a state generated by the imaging device 20 or may be an image after certain image processing is performed on the captured image generated by the imaging device 20.

Further, the external input and output unit 102 can input various types of information accumulated in the database 30 from the database 30 and can output various types of information generated by the computer device 10 to the database 30.

The display unit 104 is configured of a display device capable of displaying an image such as a liquid crystal display (LCD), and displays captured images, various pieces of information input from the database 30, and various types of information generated by the computer device 10.

The operation unit 106 is configured of an operation device capable of touch operation, such as a touch panel, and accepts an operation of a person with respect to various types of information displayed on the display unit 104.

The storage unit 108 includes a nonvolatile storage device, and stores various programs for supporting the maintenance and management of the structure, and various types of information necessary for executing various programs.

The database 30 or the storage unit 108 stores a progress model as a form of the progress model storage unit. A specific example of the progress model will be described below in detail.

According to the program stored in the storage unit 108, the CPU 110 performs various functions for supporting maintenance, management, and supporting the structure by executing various processes (for example, information processing to be described below such as damage extraction, damage information generation, damage analysis, database control, search, damage progress speed acquisition, measure determination, soundness diagnosis, or maintenance and management plan).

The CPU 110 includes a damage extraction unit 120 that extracts damage from a captured image of the inspection target structure, a damage information generation unit 122 that generates damage information on the basis of the damage extracted from the captured image, a damage analysis unit 124 that analyzes damage information of the inspection target structure on the basis of the progress model and acquires the degree of damage of the inspection target structure, a database control unit 126 that stores a captured image, damage information, and a degree of damage of the inspection target structure in the database 30 in association with each other, a search unit 128 having a function of searching for inspection result information of another structure of which the damage progress parameter is the same as or similar to that of the inspection target structure, and a function of searching the database 30 for other damage information (hereinafter referred to as "similar damage information") similar to the damage information of the inspection target structure, a damage progress speed acquisition unit 130 that acquires a damage progress speed of the inspection target structure by comparing a plurality of degrees of damage with different inspection times, a measure determination unit 132 that determines measures against the damage to the inspection target structure, a soundness diagnosis unit 134 that diagnoses soundness of the inspection target structure, and an maintenance and management planning unit 136 that generates plan information for maintenance and management of the inspection target structure.

The damage extraction unit 120 can perform extraction of damage using various methods. For example, a crack detection method described in Japanese Patent No. 4006007 can be used. This method is a crack detection method including a step of calculating wavelet coefficients corresponding to two densities to be compared, calculating respective wavelet coefficients in a case where the two densities are changed to create a wavelet coefficient table, and creating a wavelet image by performing wavelet-transformation on an input image obtained by imaging a certain concrete surface that is a crack detection target, and a step of setting wavelet coefficients corresponding to an average density of neighboring pixels in a local region and a density of pixels of interest in the wavelet coefficient table, as a threshold value, and comparing the wavelet coefficient of the pixel of interest with the threshold value to determine a crack region and a non-crack region.

It should be noted that the extraction of the damage in the damage extraction unit 120 is not limited to a case in which a partial image of damage (hereinafter referred to as "partial damage image") is extracted from the captured image. The extraction of the damage in the damage extraction unit 120 includes a case in which a damaged area in the captured image is merely identified, and in this case, information indicating at least a part of the damaged area in the captured image (hereinafter referred to as "damaged area information") is extracted by the damage extraction unit 120.

The damage information generation unit 122 generates damage information indicating a feature quantity of the damage on the basis of the captured image and the damage (which is at least one of a partial damage image or damaged area information) extracted from the captured image. The damage information generation unit 122 generates various feature amounts regarding the extracted damage as damage information. The damage information generation unit 122 in this example generates damage information including at least one of hierarchical structure information on a hierarchical structure of a vector or relative direction information on directions of the inspection target structure and the vector.

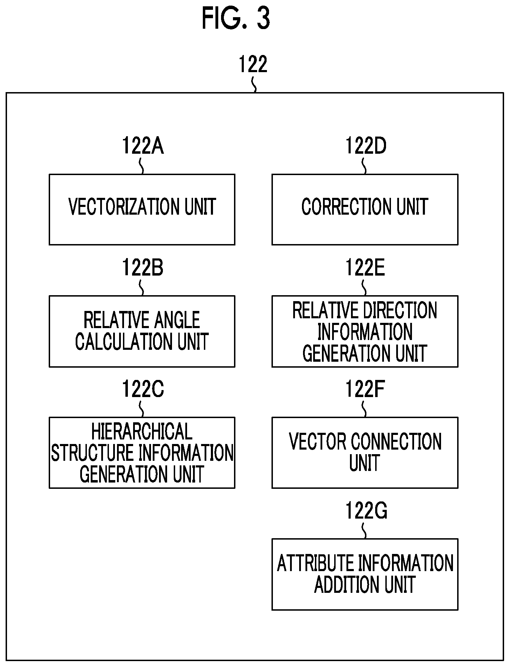

Fig. 3 is a block diagram illustrating an internal configuration example of the damage information generation unit 122. The damage information generation unit 122 of this example includes a vectorization unit 122A, a relative angle calculation unit 122B, a hierarchical structure information generation unit 122C, a correction unit 122D, a relative direction information generation unit 122E, a vector connection unit 122F, and an attribute information addition unit 122G.

The vectorization unit 122A of the damage information generation unit 122 vectorizes the damage (the partial damage image or the damaged area information) extracted by the damage extraction unit 120 to generate vector data of the damage (hereinafter referred to as "damage vector" or simply "vector").

The relative angle calculation unit 122B of the damage information generation unit 122 calculates a relative angle between the plurality of vectors. That is, the relative angle calculation unit 122B calculates an angle formed by one vector and another vector.

The hierarchical structure information generation unit 122C of the damage information generation unit 122 generates hierarchical structure information indicating the hierarchical structure of vectors. The hierarchical structure information is information in which a connection relationship between the vectors is hierarchically represented. The hierarchical structure information includes hierarchical identification information (also referred to as "affiliation hierarchy information") indicating which hierarchy each vector belongs in a vector group including a plurality of vectors. As the hierarchical identification information, for example, a hierarchy number represented by a number can be used. The hierarchical identification information may be represented by a code (for example, alphabets or symbols) other than a number.

The correction unit 122D of the damage information generation unit 122 performs correction on at least one of a plurality of vectors respectively generated from a plurality of captured images having different imaging times to perform association between coordinate positions and directions of a plurality of generated vectors respectively generated from the plurality of captured images with different imaging times. It is to be noted that although the correction unit 122D of the embodiment is an aspect for performing correction on the vector, but the "correction unit" in the present invention may be an aspect for performing the correction on a plurality of captured images having different imaging times.

The relative direction information generation unit 122E of the damage information generation unit 122 generates relative direction information indicating a relative relationship between the direction of the structure and the direction of the vector. For example, an angle determined on the basis of a direction of a reference line of the structure and the direction of the vector is generated as the relative direction information.

The vector connection unit 122F of the damage information generation unit 122 connects a plurality of spatially separated vectors.

The attribute information addition unit 122G of the damage information generation unit 122 adds various types of attribute information (also referred to as "additional information") to the damage information. For example, in the case of cracks, various types of attribute information indicating not only a position and a direction in cracks occur but also a length and a width of cracks, an interval between cracks, and a density of cracks are added to the damage information.

The damage analysis unit 124 analyzes the damage information of the inspection target structure on the basis of the progress model input from the database 30 by the external input and output unit 102 (which is one form of "progress model acquisition unit") to acquire the degree of damage which is an evaluation classification of the degree of damage progress corresponding to the damaged state of the inspection target structure. The damage progress speed acquisition unit 130 of this example analyzes at least the vector of the damage information in a case where acquiring the degree of damage. More preferably, the damage progress speed acquisition unit 130 analyzes at least the hierarchical structure information.

The damage analysis unit 124 of this example acquires the degree of damage by analyzing the damage information on the basis of at least one of natural environment information on a natural environment of the inspection target structure, usage situation information on a usage situation of the inspection target structure, structure information on the structure of the inspection target structure, medicine information on a medicine assigned to the inspection target structure, or maintenance and management record information on a repair record and a reinforcement record of the inspection target structure.

The database control unit 126 has various database control functions. The database control unit 126 in this example stores the damage progress speed in the database 30 in association with other inspection result information (including the captured image, the damage information, and the degree of damage). Further, the database control unit 126 of this example stores the damage progress parameter affecting the damage progress of the structure in association with the inspection result information of the structure (including the captured image, the damage information, the degree of damage, and the damage progress speed) in the database 30.

The search unit 128 has a function (a function as a first search unit) of searching the database 30 for inspection result information of another structure inspection result information of another structure of which the damage progress parameter is the same as or similar to that of the inspection target structure. For example, the search unit 128 searches for at least a part (including the captured image, the damage information, the degree of damage, or the damage progress speed) of the inspection result information in the structure other than the inspection target structure on the basis of the damage progress parameter.

Further, the search unit 128 has a function (a function as a second search unit) of searching the database 30 for similar damage information which is another damage information similar to the damage information of the inspection target structure. Further, the search unit 128 has a function of searching the database 30 for the inspection result information associated with the similar damage information. That is, the search unit 128 searches the database 30 for similar damage information using the damage information including the damage vector and the hierarchical structure information, and searches the database 30 for at least a part (including the captured image, the degree of damage, or the damage progress speed) of the inspection result information stored in the database 30 in association with the similar damage information.

Further, the search unit 128 has a function (function as a third search unit) of searching the database 30 for a progress model corresponding to another structure of which the damage progress parameter is the same as or similar to the structure that is an inspection target.

The damage progress speed acquisition unit 130 compares a plurality of degrees of damage acquired respectively on the basis of a plurality of captured images having different inspection times (in this example, imaging times) of the inspection target structure to acquire the damage progress speed of inspection target structure.

Further, in a case where the degree of damage of the inspection target structure at a time earlier than the latest imaging time of the inspection target structure does not exist in the database 30, the damage progress speed acquisition unit 130 estimates the damage progress speed of the inspection target structure at the latest inspection time of the inspection target structure or at a time earlier than the latest inspection time using at least one of the progress speed or the degree of damage associated with the similar damage information in the database 30.

In addition, the damage progress speed acquisition unit 130 estimates the damage progress speed of the inspection target structure at a time earlier than the latest inspection time of the inspection target structure using the progress speed stored in association with the similar damage information in the database 30.

The measure determination unit 132 determines measures (in this example, measure classification) against the damage of the inspection target structure on the basis of the degree of damage and the damage progress speed.

The soundness diagnosis unit 134 diagnoses soundness of the inspection target structure on the basis of at least one of the degree of damage, the damage progress speed, or the measure classification.

The maintenance and management planning unit 136 generates maintenance and management plan information including at least one of repair or reinforcement of the inspection target structure on the basis of at least a part of the inspection result information (the degree of damage, the damage progress speed, the measure classification, and the soundness).

### <Progress Model>

As an example of the progress model, a progress model showing a damage progress mechanism of a reinforced concrete (RC) deck of a road bridge is introduced.

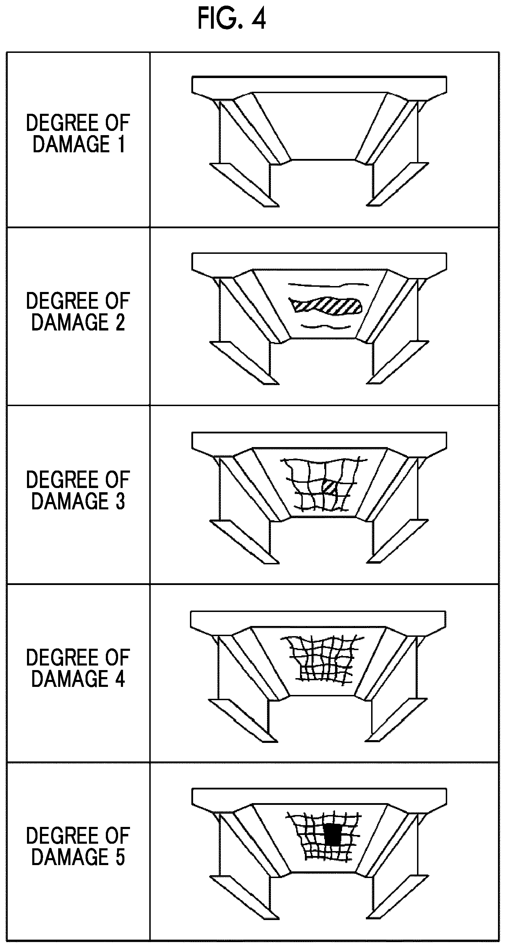

Fig. 4 is a diagram schematically illustrating an example of the progress model. In this progress model, an evaluation classification of a degree of damage progress is represented by degree of damage 1 to degree of damage 5. A correspondence relationship between each degree of damage and the damaged state is as follows.

### Degree of damage 1: No damage.

Degree of damage 2: A state in which a plurality of cracks occur in parallel in a lateral direction (a short direction orthogonal to a direction of passage of a vehicle). This is a stage in which a plurality of cracks due to drying and shrinkage become parallel beams.

Degree of damage 3: A state in which cracks in a vertical direction (a longitudinal direction parallel to the direction of passage of vehicle) and cracks in the lateral direction cross each other. This is a stage in which a plurality of cracks due to an active load becomes a lattice shape and a density of the cracks in an area in the lattice shape increases. In the latter half of a period, cracks penetrate in a vertical direction of the deck (a vertical direction orthogonal to a lower surface of the deck).

Degree of damage 4: A state in which a density of cracks of the area in a lattice shape exceeds a defined value and fracture surfaces of a plurality of penetrated cracks are smoothed. This is a stage in which the deck loses shear resistance due to a rubbing action.

Degree of damage 5: A state in which a missing part is generated. The missing part is generated due to a wheel load exceeding reduced punching shear strength.

Next, an example of the damage analysis in the damage analysis unit 124 in a case where the first progress model is used will be described.

(Damage Analysis Example 1) In a state where a plurality of cracks have occurred (degree of damage 2 or higher), a determination is made whether the degree of damage for each part of the deck is degree of damage 2 or degree of damage 3 or higher on the basis of at least the direction of the vector (indicating a crack direction) in the damage information.

(Damage Analysis Example 2) In a state where a plurality of cracks has occurred in a lattice shape (degree of damage 3 or higher), a determination is made whether the degree of damage for each part of the deck is degree of damage 3 or degree of damage 4 or higher on the basis of at least the density of cracks in the damage information.

(Damage analysis example 3) In a case where a missing part has been detected from the captured image, the degree of damage is 5.

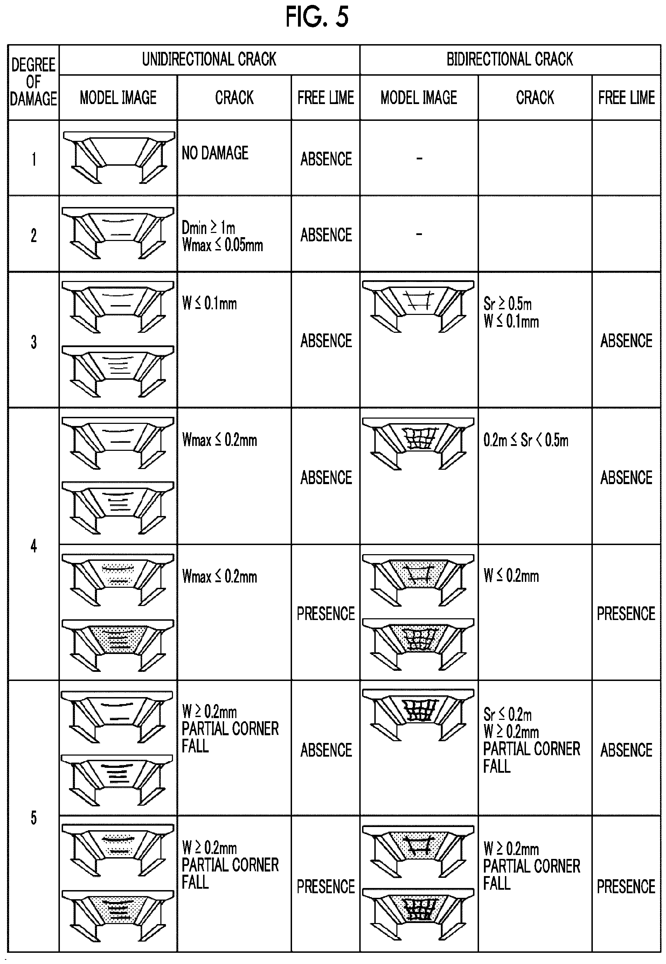

Fig. 5 is a diagram schematically illustrating another example of the progress model. In this progress model, an evaluation classification of a degree of damage progress is represented by degree of damage 1 to degree of damage 5. A correspondence relationship between each degree of damage and the damaged state is as follows.

First, a correspondence relationship between the degree of damage and a damaged state for unidirectional cracks will be described.

### Degree of damage 1: No damage.

Degree of damage 2: Cracks are primarily only in one direction. A minimum crack interval Dmin is 1 m or more. A maximum crack width Wmax is 0.05 mm or less. There is no free lime.

Degree of damage 3: Cracks are primarily only in one direction. The crack interval does not matter. The crack width W is 0.1 mm or less. In some cases, there may be cracks having the width exceeding 0.1 mm. There is no free lime.

Degree of damage 4: Cracks are primarily only in one direction. The crack interval does not matter. The maximum crack width Wmax is equal to or smaller than 0.2 mm. In some cases, there may be cracks having a width exceeding 0.2 mm.

Degree of damage 5: Cracks are mainly in one direction. The crack interval does not matter. The crack width W is equal to or greater than 0.2 mm, and there is a partial corner fall.

Next, a correspondence relationship between the degree of damage and the damaged state for bidirectional cracks will be described.

Degree of damage 3: The cracks have a lattice shape. TA size Sr of the lattice is 0.5 m or more. A crack width W is 0.1 mm or less. In some cases, there are cracks having the width exceeding 0.1 mm.

Degree of damage 4: The cracks have a lattice shape. In a case where there is no free lime, the lattice size Sr is 0.2 m to 0.5 m. In a case where there is free lime, the size of the lattice does not matter. The crack width W is equal to or smaller than 0.2 mm. In some cases, there may be cracks having the width exceeding 0.2 mm.

Degree of damage 5: The cracks have a lattice shape. In a case where there is no free lime, the lattice size Sr is less than 0.2 m. In a case where there is free lime, the size of the lattice does not matter. The crack width W is equal to or greater than 0.2 mm, and there is no partial corner fall.

It should be noted that it is preferable for the progress model to indicate a correspondence relationship between model damage information in which the damaged state of a model structure is represented by a vector and the degree of damage. That is, data indicating the damaged state in the progress model is described in a vector form so that a comparison with the vector included in the damage information is facilitated. In such a case, the damage analysis unit 124 compares the vector included in the damage information with the vector included in the progress model to thereby easily search for data indicating the damaged state in the progress model corresponding to the damage information of the inspection target structure and acquire the degree of damage associated with the data.

### <Maintenance and Management Flow of Structure>

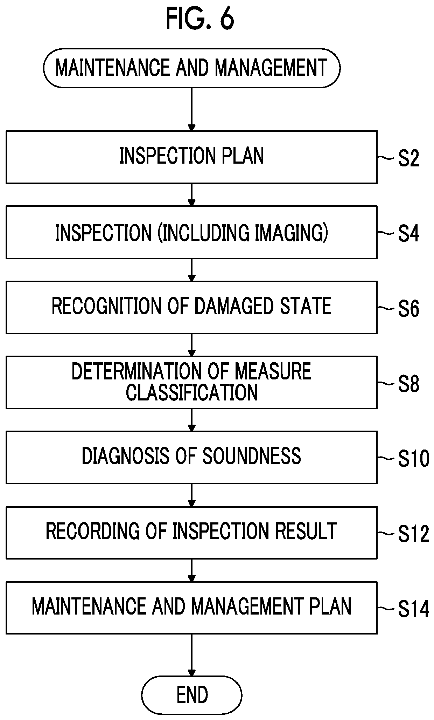

Fig. 6 is a schematic flowchart illustrating a flow of an example of maintenance and management of a structure using the computer device 10 of Fig. 2. Hereinafter, a flow of standard maintenance and management related to periodic inspection in a case where the structure 1 that is an inspection target is a bridge will be described with reference to Fig. 6.

First, an inspection plan for the structure 1 is performed (step S2). Although this step can be performed with the support of the computer device 10, a person can perform the step without using the computer device 10.

Next, inspection work for the structure 1 is performed on the basis of the created inspection plan information (step S4). The inspection of the structure 1 includes imaging of the structure 1 using the imaging device 20. There is a case where the imaging of the structure 1 is performed manually at the time of close visual inspection of the structure 1 by the inspector or a case where the imaging of the structure 1 is automatically by a robot or a drone. In the inspection of the bridge, the inspector images, for example, the deck on the lower surface of the bridge and acquires a deck image as a captured image of the structure 1.

Next, recognition of the damaged state (also referred to as "recognition of damaged state") is performed on the basis of an inspection result (step S6). The recognition of the damaged state is generally performed for each part (or for each member) of the structure on the basis of the captured image of the structure 1. In a case where visual inspection is performed in the inspection (step S4), it is preferable to recognize the damaged state on the basis of a visual inspection result together with the captured image.

The recognition of the damaged state (step S6) includes generation of damage information based on the captured image and acquisition of the damage progress speed based on the damage information that are performed by the computer device 10, which will be described below in detail.

Although the subsequent processes (steps S8 to S14) can be performed with the support of the computer device 10, a person can perform the step without using the computer device 10.

The measure classification is determined on the basis of the result of recognition the damaged state (step S8). In general, the determination of the measure classification is performed on at least one of for each structural member classification, for each location (or member), or for each damage type on the basis of the damaged state of each member of the structure.

Next, diagnosis of the soundness of the structure is performed on the basis of a result of the recognition the damaged state and a result of the determination of the measure classification (step S10). The diagnosis of the soundness is generally performed from the viewpoint of the influence of damage on the function of the structure. For example, in a case where it is diagnosed that the function of the structure does not interfere even in a case where the damage occurs, the classification of soundness is "sound". In a case where it is diagnosed that the function of the structure has not yet interfered, but it is desirable to take some measures from the point of view of preventive maintenance, the classification of soundness is a "preventive maintenance stage". In a case where it is diagnosed that the function of the structure is likely to interfere in the future and it is necessary to earlier take measures, classification of the soundness is an "early measure stage". In a case where it is diagnosed that the function of the structure has already interfere or the function of the structure is highly likely to interfere in the future and it is necessary to take urgent measures, the classification of the soundness is an "Emergency measure stage".

Then, recording of the inspection result is performed (step S12). In this example, an inspection work result (captured images, close visual inspection reports of inspection workers, or the like) which is inspection result information first obtained in the inspection work of the inspector (step S4), an information processing result which is inspection result information obtained secondly in the recognition of the damaged state (step S6), a measure determination result obtained in the determination of the measure classification (step S8), and a soundness diagnosis result obtained in the diagnosis of the soundness (step S10) are recorded in the database 30 as inspection results.

A report created by the computer device 10 or the inspector includes a damage diagram. In the damage diagram, for example, cracks and free lime are described as damage. Examples of a format of the damage diagram include a format described in the captured image and a format described in a schematic diagram. At the time of creating the report, in a case where a past report in which the same bridge has been inspected exists in the database 30, content of the progress of the damage may be described for the past report. Image processing different from that for the captured image added to a current report may be used for the past report. Also, in a case where a different inspector creates the past report, a format of the damage diagram may be different.

Then, a plan for maintaining, repairing, or the like of the structure is performed on the basis of the inspection result information recorded in the database (step S14). Here, "repairing or the like" includes at least one of repair or reinforcement of the structure.

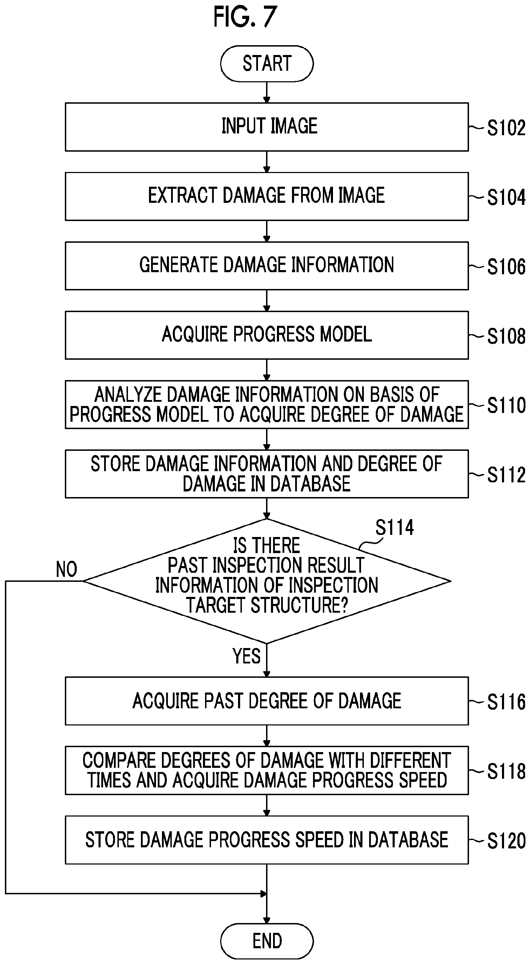

Fig. 7 is a flowchart illustrating a flow of an example of information processing executed in the recognition of the damaged state (step S6) in the first embodiment. This processing is executed according to a program by the CPU 110 of the computer device 10.

First, the external input and output unit 102 inputs the captured image of the inspection target structure (step S102). The external input and output unit 102 can directly input the captured image from the imaging device 20 through wireless communication or wired communication with the imaging device 20. In a case where the captured image is stored in the database 30, the external input and output unit 102 can input the captured image from the database 30. In a case where the captured image is stored in a recording medium, the external input and output unit 102 can input the captured image from the recording medium.

Then, the damage extraction unit 120 extracts the damage from the captured image of the inspection target structure (step S104).

Then, the damage information generation unit 122 generates damage information indicating a feature of the extracted damage (step S106).

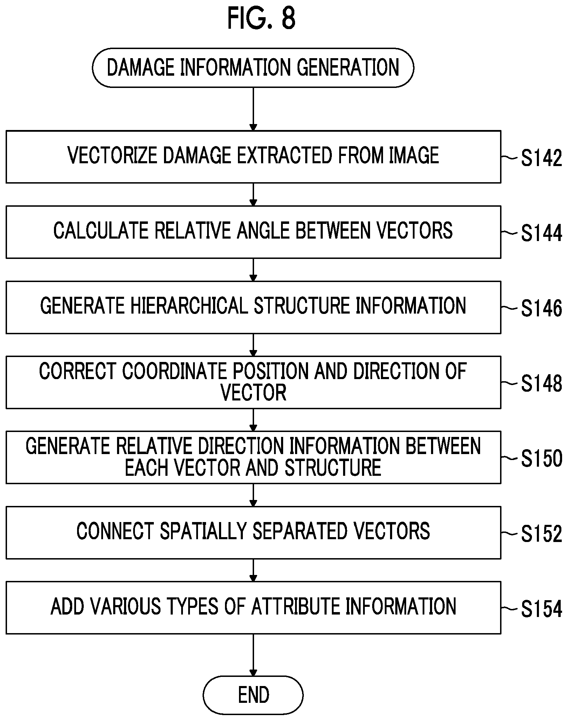

Fig. 8 is a flowchart illustrating details of damage information generation (step S106).

The damage extracted in step S104 of Fig. 7 is vectorized by the vectorization unit 122A of the damage information generation unit 122, and a vector is generated (step S142).

Also, the relative angle calculation unit 122B of the damage information generation unit 122 calculates the relative angle between the plurality of vectors (step S144), and the hierarchical structure information generation unit 122C of the damage information generation unit 122 generates a hierarchical structure information indicating a hierarchical structure of the vectors (step S146).

Further, correction is performed on the damage vector using the hierarchical structure information by the correction unit 122D of the damage information generation unit 122 (step

148). Accordingly, a coordinate position and a directional deviation of the damage vector are corrected with high accuracy. This is because it is conceivable that it is difficult to correct coordinate position deviation and direction deviation in a raster data correction process such as simply comparing partial damage images with each other and correcting a difference therebetween since the degree of damage progress progresses with the lapse of time, but the coordinate position deviation and the direction deviation can be reliably corrected even in a case where the degrees of damage progress are different due to different imaging times since correction in which vectors are compared with each other (correction of vector data) is performed using the hierarchical structure information.

Relative direction information indicating a relative relationship between the direction of the structure 1 and the direction of each vector is generated by the relative direction information generation unit 122E of the damage information generation unit 122 (step S150).

In steps S142 to S150 above, in this example, damage information including the vectors, the relative angle between the vectors, the hierarchical structure information, and the relative direction information is generated.

Also, a plurality of spatially separated vectors are connected by the vector connection unit 122F of the damage information generation unit 122 (step S152). That is, the vectors hierarchically structured in step S146 are connected as necessary by the vector connection unit 122F, and a hierarchical structure is reconstructed.

Also, various types of attribute information (additional information) is added to the damage information by the attribute information addition unit 122G of the damage information generation unit 122 (step S154).

Referring back to Fig. 7, steps S108 to S120 in Fig. 7 will be described.

The external input and output unit 102 acquires the progress model (step S108). The progress model shows the correspondence relationship between the damaged state of the model structure and the degree of damage which is an evaluation classification of a degree of damage progress. Here, "degree of damage progress" indicates how far the damage has progressed at the time of inspection.

Then, the damage analysis unit 124 analyzes the damage information of the inspection target structure on the basis of the progress model to acquire the evaluation classification (the degree of damage) of the degree of damage progress corresponding to the damaged state of the inspection target structure (step S110).

Then, the damage information and the degree of damage acquired on the basis of the captured image are stored in the database 30 via the external input and output unit 102 by the database control unit 126 (step S112).

Then, a determination is made as to whether or not past inspection result information of the current inspection target structure exists in the database 30 (step S114).

In a case where there is the past inspection result information (YES in step S114), steps S116 to S120 are executed.

First, the past degree of damage acquired on the basis of past captured images is acquired from the database 30 via the external input and output unit 102 (step S116).

Then, the damage progress speed acquisition unit 130 compares the degree of damage acquired on the basis of the latest captured image with the degree of damage acquired on the basis of the past captured image and acquires the damage progress speed of the structure (Step S 118).

The "past captured image" is a captured image captured at a past time (for example, five years ago) from the latest imaging time (for example, this year). A plurality of degrees of damages acquired respectively on the basis of (using, as a source,) a plurality of past captured images with different imaging times are compared. For example, the degree of damage based on the captured image one year ago (a degree of damage one year ago) is compared with the degree of damage based on the captured image six years ago (degree of damage six years ago), such that acquisition of the damage progress speed such as calculation of progress speed one year ago or calculation of the current progress speed can be performed.

Then, the damage progress speed is stored in the database 30 in association with the damage information and the degree of damage by the database control unit 126 (step S120).

According to the information processing of this example, for example, a repair plan can be made from the viewpoint of prevention by using a calculation result of the damage progress speed of the inspection target structure. For example, it is possible to appropriately perform a determination of the necessity of repair and examination of the repair plan by comparing the damage progress speed of the inspection target structure with an average value of damage progress speeds of other structures of the same type.

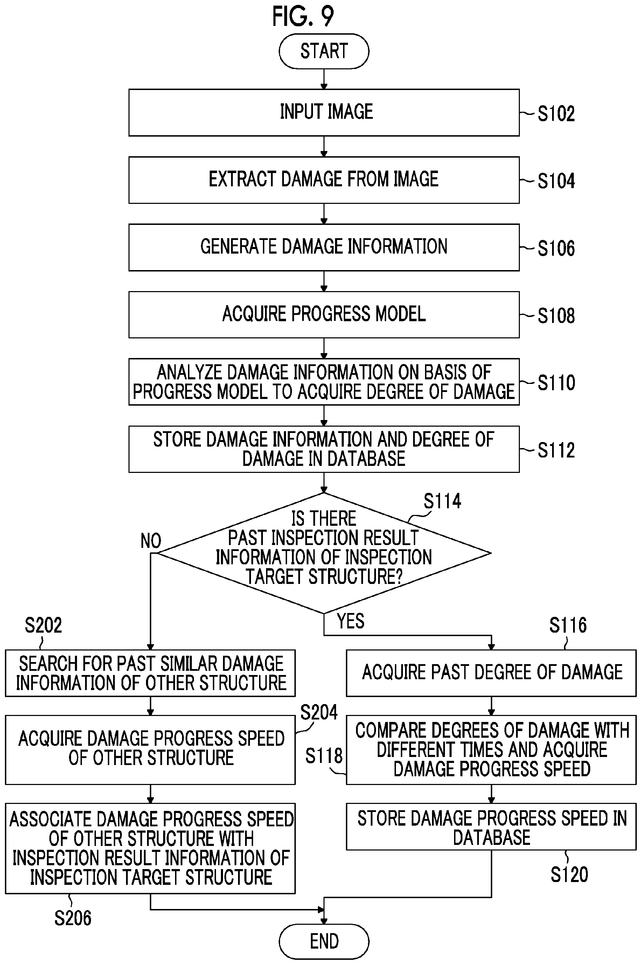

It should be noted that in the flowchart of Fig. 7, in a case where there is no past inspection result information (NO in step S1 14), the acquisition of the damage progress speed is not performed, but it is preferable to perform information processing using the damage progress speed obtained with respect to another structure, as shown in the flowchart of Fig. 9.

Steps S102 to S120 in Fig. 9 are the same as those in Fig. 7, and description thereof will be omitted. In this example, in a case where there is no past inspection result information (NO in step S114), steps S202 to S206 are executed.

First, the search unit 128 searches the database 30 for past similar damage information of a structure (which is a bridge in this example) different from the inspection target structure (step S202). Here, other damage information similar to the damage information of the inspection target structure, which is past damage information of a structure different from the inspection target structure, is searched for.

Then, the external input and output unit 102 acquires the damage progress speed of the structure other than the inspection target structure from the database 30 (step S204). Here, the damage progress speed searched for and stored in the database 30 in association with the similar damage information is acquired from the database 30.

Then, the database control unit 126 performs control to associate the acquired damage progress speed with other inspection result information of the inspection target structure with respect to the database 30 (step S206).

According to information processing of this example, even in a case where there is no past inspection result of the inspection target structure, for example, a repair plan can be made from the point of view of prevention using the prediction result of the damage progress speed of another structure.

### [Second Embodiment]

A computer device 10 according to a second embodiment has a function of searching for past inspection result information of a structure other than the inspection target structure from the database 30 using a parameter affecting damage progress of a structure (hereinafter referred to as "damage progress parameter"), and a function of generating a progress model of the inspection target structure on the basis of a result of the search.

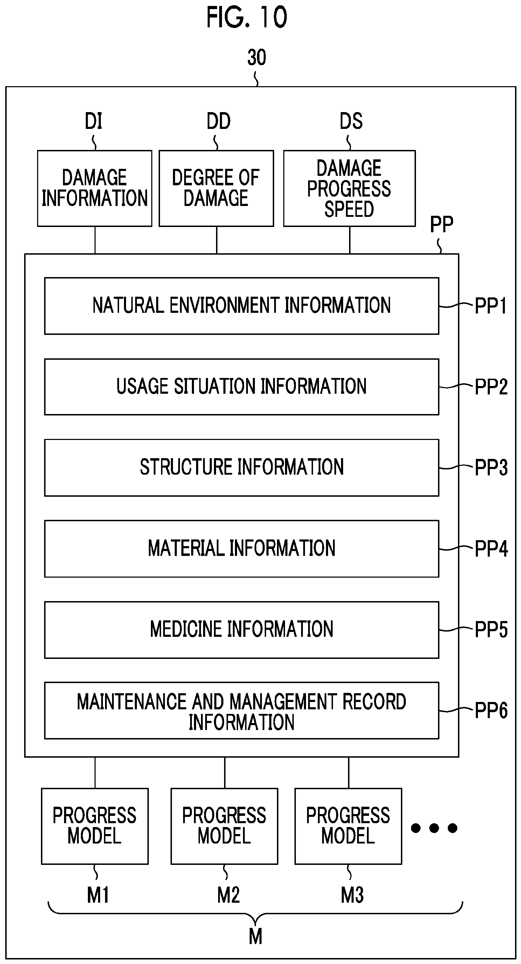

Fig. 10 is a schematic diagram illustrating a data configuration example regarding the progress model of the database 30.

As illustrated in Fig. 10, the database 30 stores a damage progress parameter PP such as natural environment information PP1 on a natural environment of the structure, usage situation information PP2 on a usage situation of the structure, structure information PP3 on a structure of the structure, material information PP4 on a material of the structure, medicine information PP5 on a medicine assigned to the structure, and maintenance and management record information PP6 on a reinforcement record and a repair record of the structure in association with inspection result information including the damage information DI of the structure, the degree of damage DD of the structure, and the damage progress speed DS of the structure, and the progress model M. That is, the database 30 stores a damage progress parameter PP, inspection result information, and a progress model of a structure other than the inspection target structure in association with each other. In addition, even in a state where the inspection target structure is not inspected and past inspection result information of the inspection target structure is not accumulated, the database 30 stores at least the damage progress parameters PP1 to PP5 of the inspection target structure in association with inspection plan information.

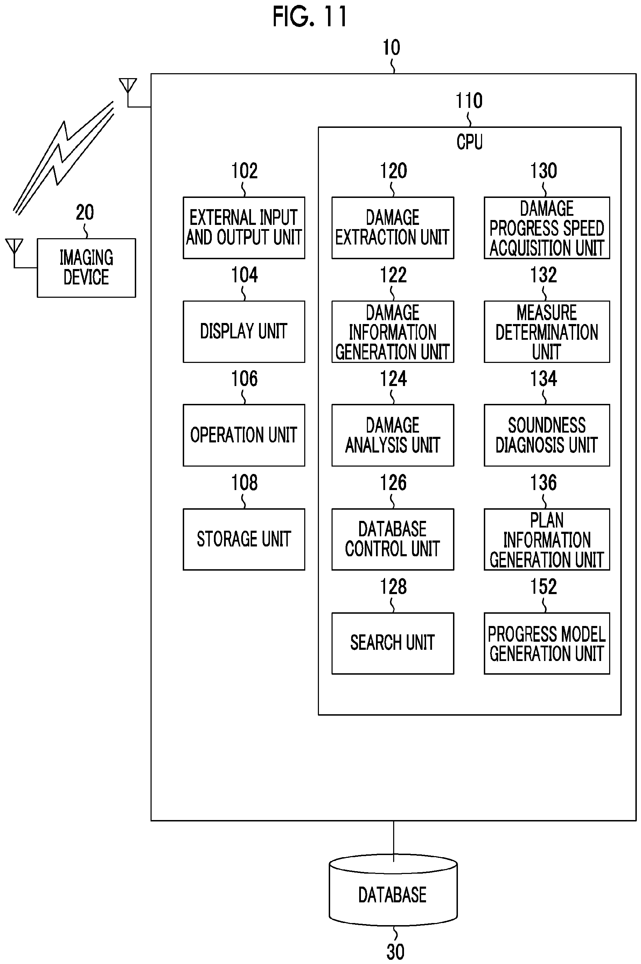

Fig. 11 is a block diagram illustrating a configuration example of a computer device 10 according to the second embodiment. In Fig. 11, the same components as those in the first embodiment illustrated in Fig. 2 are denoted by the same reference numerals, and the content already described in the first embodiment will be omitted below.

The search unit 128 has a function of searching the database 30 for past inspection result information (including damage information DI, degree of damage DD, and damage progress speed DS) of a structure other than the inspection target structure, which is inspection result information of another structure of which the damage progress parameter is the same as or similar to that of the inspection target structure.

The progress model generation unit 152 generates a progress model M corresponding to the damage progress parameter of the inspection target structure using the inspection result information of the other structure that has been searched for.

The database control unit 126 stores the generated progress model M in the database 30 in association with the damage progress parameter PP. The generated progress model M may be stored in the database 30 in association with the inspection plan information of the inspection target structure.

In a case where the inspection target is inspected, the damage analysis unit 124 can acquire the progress model M generated on the basis of past inspection result information of the structure other than the inspection target structure from the database 30 via the external input and output unit 102 and acquire the degree of damage DD of the inspection target structure on the basis of the acquired progress model M. For example, the damage analysis unit 124 acquires, from the database 30, the damage progress parameter PP of the inspection target structure stored in association with the inspection plan information of the inspection target structure in the database 30 and acquires the progress model M stored in association with the damage progress parameter PP of the inspection target structure in the database 30. In a case where the generated progress model M is stored in the database 30 in association with the inspection plan information of the inspection target structure, the damage analysis unit 124 can directly acquire the progress model M from the database 30 on the basis of the inspection plan information of the inspection target structure.

The damage progress speed acquisition unit 130 can acquire the damage progress speed of the inspection target structure using the degree of damage DD based on the progress model M generated by the progress model generation unit 152.

### [Third Embodiment]

A computer device 10 in a third embodiment has a function of subdividing the progress model.

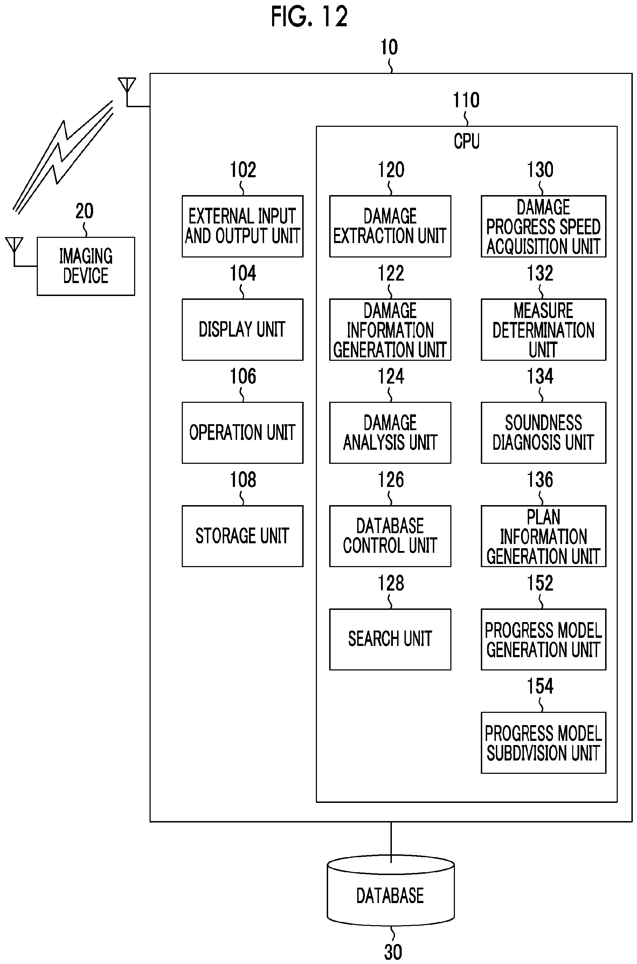

Fig. 12 is a block diagram illustrating a configuration example of the computer device 10 according to the third embodiment. In Fig. 12, the same components as those in Fig. 2 or 11 are denoted by the same reference numerals, and content already described in the first embodiment or the second embodiment will be omitted below.

A progress model subdivision unit 154 subdivides the progress model on the basis of the damage information of the inspection target structure. The progress model subdivision unit 154 subdivides the damaged state and the degree of damage in the progress model using, for example, the vector constituting the damage information and the hierarchical structure information.

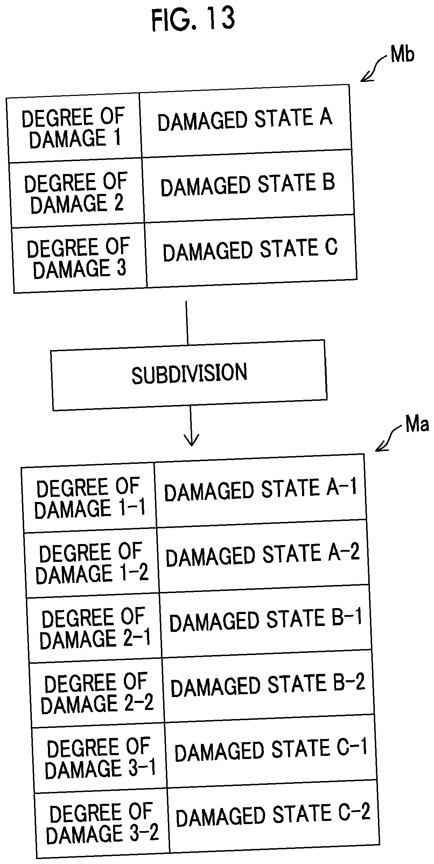

Fig. 13 is an illustrative diagram that is used for description of an example of the subdivision of the progress model. In Fig. 13, the progress model Mb before the subdivision is a progress model for determining a damaged state with degrees of damage of three stages (degree of damage 1, degree of damage 2, degree of damage 3). In this example, each of the plurality of degrees of damage is subdivided into two by the progress model subdivision unit 154, and the progress model Ma after the subdivision is a progress model for determining a damaged state with degrees of damage of six stages (degree of damage 1-1, Degree of damage 1-2, degree of damage 2-1, degree of damage 2-2, degree of damage 3-1, and degree of damage 3-2).

There are various aspects of progress model subdivision in the progress model subdivision unit 154.

First, there is an aspect in which inspection result information accumulated in the database 30 is analyzed, and the progress model is subdivided on the basis of a result of the analysis. For example, the progress model subdivision unit 154 analyzes the inspection result information to first determine whether or not to divide the measure classification. In a case where the progress model subdivision unit 154 determines to divide the measure classification, the progress model subdivision unit 154 divides the degree of damage corresponding to the measure classification to be divided according to the measure classification after the division, and also divides the damage information corresponding to the degree of damage to be divided, according to the degree of damage after the division. The progress model subdivision unit 154 subdivides the progress model by reflecting a correspondence relationship between the damage information after the division and the degree of damage after the division in the progress model. Although a person may decide whether or not the measure classification is to be divided, the progress model subdivision unit 154 may automatically determine whether or not the measure classification is to be divided.

Second, there is an aspect in which an input for a subdivision instruction is accepted and the progress model is subdivided according to the instruction input. For example, the operation unit 106 or the external input and output unit 102 accepts an instruction input indicating the degree of damage that is the division target and divides the damage information corresponding to the degree of damage to be divided according to the degree of damage after the division. The progress model is subdivided by reflecting a correspondence relationship between the damage information after division and the degree of damage after division in the progress model.

Third, there is an aspect in which the progress model is subdivided by increasing a parameter for determining the degree of damage. For example, the progress model is subdivided by changing the progress model from the progress model showing the correspondence relationship between the damaged state and the degree of damage to the progress model showing the correspondence relationship between the damaged state, the damage progress speed, and the degree of damage.

### [Variation of Acquisition of Damage Progress Speed]

There are various variations for acquisition of damage progress speed.

Although a case in which the temporal difference of the degree of damage, which is the evaluation classification of the degree of damage progress in the inspection target structure is calculated and the "temporal difference of the degree of damage" is acquired as the damage progress speed (hereinafter referred to as a "first damage progress speed") has been described in the first to third embodiments described above, it is preferable to calculate a temporal difference of information other than the degree of damage and acquire the other damage progress speed different from the first damage progress speed together.

First, the temporal difference for each feature amount of damage can be calculated, the "temporal difference for each feature amount of damage" can be acquired as a second damage progress speed, and the second damage progress speed can be stored in the database 30 in association with the first damage progress speed.

For example, in a case where a plurality of cracks occur in a plurality of types of feature amounts (for example, different lengths, different widths, and different intervals) in the inspection target structure, the state of the cracks is quantified for each feature amount (for example, the length, the width, and the interval) through image processing and a temporal difference (for example, a temporal difference of the length, a temporal difference of the width, and a temporal difference of the interval) for each feature amount of the cracks is calculated as the second damage progress speed.

Second, a temporal difference of the damage pattern can be calculated, the "temporal difference of the damage pattern" can be acquired as a third damage progress speed, and the third damage progress speed can be stored in the database 30 in association with the first damage progress speed.

For example, in a case where cracks occur with a complicated pattern (for example, a spider web shape) in the inspection target structure, it is necessary to evaluate a plurality of cracks as a "bundle" (group) instead of individually evaluating the cracks one by one in order to appropriately recognize a state of cracks. For example, a "temporal difference of hierarchical structure information" (for example, a change in a maximum value of a hierarchy number) is calculated as the third damage progress speed in the past and the present.

That is, it is possible to more appropriately acquire the damage progress speed by performing the analysis using the damage information.

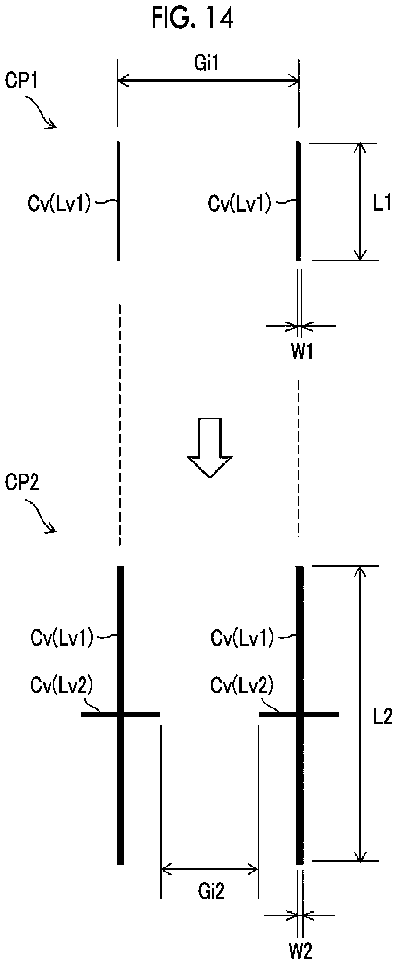

Fig. 14 is an illustrative diagram that is used to describe a case where a first variation and a second variation of acquisition of the damage progress speed are performed at the same time. A crack pattern CP1 on the upper side in Fig. 14 is a pattern of cracks Cv (Lv1) extracted at the time of previous inspection. A crack pattern CP2 on the lower side in Fig. 14 is a pattern of cracks Cv (Lv1) and Cv (Lv2) extracted at the time of inspection at this time. The cracks Cv (Lv1) and Cv (Lv2) in Fig. 14 are represented by vectors (damage vectors) acquired through line segment approximation of cracks in the captured image. Also, L1, W1, Gil, and Lv1 in Fig. 14 are a length and a width of cracks at the time of previous inspection, an interval between the vector groups, and a maximum value of the hierarchy number, respectively. Also, L2, W2, Gi2, and Lv2 in Fig. 14 are a length and a width of the cracks at the time of the inspection at this time, an interval between the vector groups, and a maximum value of the hierarchy number, respectively. Then, the damage progress speed acquisition unit 130 calculates the difference (L2 - L1) between the lengths and a difference (W2-W1) between the widths of the cracks Cv (Lv1) at the previous time and the present time, and a difference (Gi2 - Gi1) between the intervals between the vector groups as the second damage progress speed, calculates a difference (Lv2 - Lv1) between the maximum values of the hierarchy numbers as the third damage progress speed, and stores the second damage progress speed and the third damage progress speed in the database 30 together with the first damage progress speed. Even in a case where the temporal difference (the first damage progress speed) of the degree of damage between the time of the previous inspection and the time of the current inspection becomes "0" (zero), the second damage progress speed (L2 - L1, W2 - W1, and Gi2 - Gi1) and the third damage progress speed (Lv2 - Lv1) are larger than "0" (zero), and therefore, it is possible to appropriately recognize the degree of damage progress even in a case of damage progress at an initial stage at which the first damage progress speed becomes zero, by referring to at least one of the second damage progress speed or the third damage progress speed.

In addition, the calculation of the damage progress speed may incorporate inspection result information for each part of the structure as a parameter. That is, information other than the damage information is also used to improve prediction accuracy of the damage progress speed.

### [Variation in Search of Damage Progress Speed]

There are various variations in search of the damage progress speed.

First, the damage progress speed is searched for using the damage progress parameter as a search key. More specifically, a plurality of damage progress speeds are stored in the database 30 in association with the damage progress parameter and the damage progress speed. The search unit 128 searches the database 30 for a necessary damage progress speed using the damage progress parameter as a search key. Since the example of the damage progress parameter has been described in the second embodiment, description thereof will be omitted herein.

Second, a typical damage progress speed is searched for from a plurality of damage progress speeds associated with the same damage progress parameter. For example, in a case where a plurality of damage progress speeds are associated with the same damage progress parameter, the search unit 128 searches the database 30 for only a typical damage progress speed (the damage progress speed within a certain value from an average value or the most frequent region) except that the damage progress speed which is a certain value or more separated from the average value or the damage progress speed which is a certain value or more separated from the most frequent region.

Third, the search unit 128 searches for the damage progress speed using results calculated through a statistical scheme using a learning function. Various aspects can be considered for the learning function. For example, in a case where the damage progress model suitable for the inspection target structure as described in the second embodiment is generated using the learning function, the damage progress speed associated with the generated damage progress model is searched for from the database 30.

Fourth, a similar measure is set and the search unit 128 searches for the damage progress speed of another structure most similar to the inspection target structure, or the damage progress speed associated with damage information similar to damage information of the inspection target structure (similar damage Information).

### [Variation in Use of Damage Progress Speed]

There are various variations for use of the damage progress speed.

First, in a case where an inspection result report is created by the computer device 10, the damage progress speed can be included in the inspection result report. Since the damage progress speed can be referred to together with the damaged state as compared with a case in which information (for example, only a damaged state of a structure) other than the damage progress speed is reported, it is easy for a repair plan to be appropriately made.

Second, the damage progress speed can be used for various statistics by associating the damage progress speed with various types of information stored in the database 30 using the computer device 10. The damage progress speed can also be used for applications (for example, design of structures) other than maintenance and management of the structures.

Third, the damage progress speed can be used for creation of a hazard map regarding structures. For example, a structure with a high damage progress speed is likely to be highly dangerous as compared with other structures of the same type or under the same condition, and measures for limiting the use of such structures can be taken.

Further, convenience in various applications as well as the maintenance and management of the structures can be achieved by storing not only the damage progress speed but also various types of information (for example, the hierarchical structure information and the relative direction information) included in the damage information generated by the damage information generation unit 122 in the database 30.

### [Variation in Generation of Damage Information]

### <Generation of Damage Vector>

Hereinafter, a case where the damage is cracks of a concrete structure will be described by way of example.

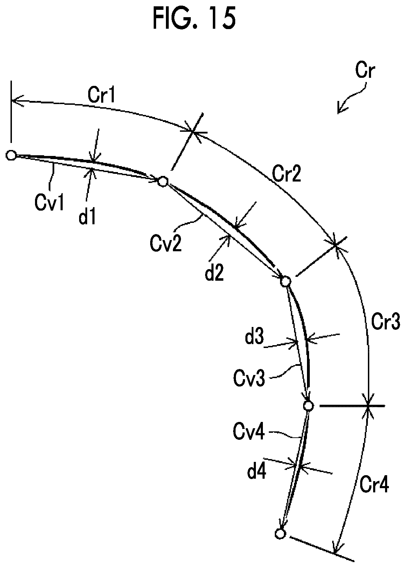

When vectorization is performed by the vectorization unit 122A of the damage information generation unit 122, the extracted damage (cracks) is binarized and/or thinned, as necessary. It should be noted that the "Vectorization" is to find a line segment that is determined by a start point and an end point with respect to the damage, and in a case where the damage (cracks) is curved, the damage is divided into a plurality of sections so that a distance between a curve and a line segment is equal to or smaller than a threshold value, and a damage vector is generated for each of the plurality of sections. In the example of Fig. 15, the curved damage Cr is divided into four sections Cr1 to Cr4, and damage vectors Cv1 to Cv4 are generated for the respective sections, so that distances d1 to d4 between the damage and the damage vectors Cv1 to Cv4 in the sections Cr1 to Cr4 are equal to or smaller than the threshold value.

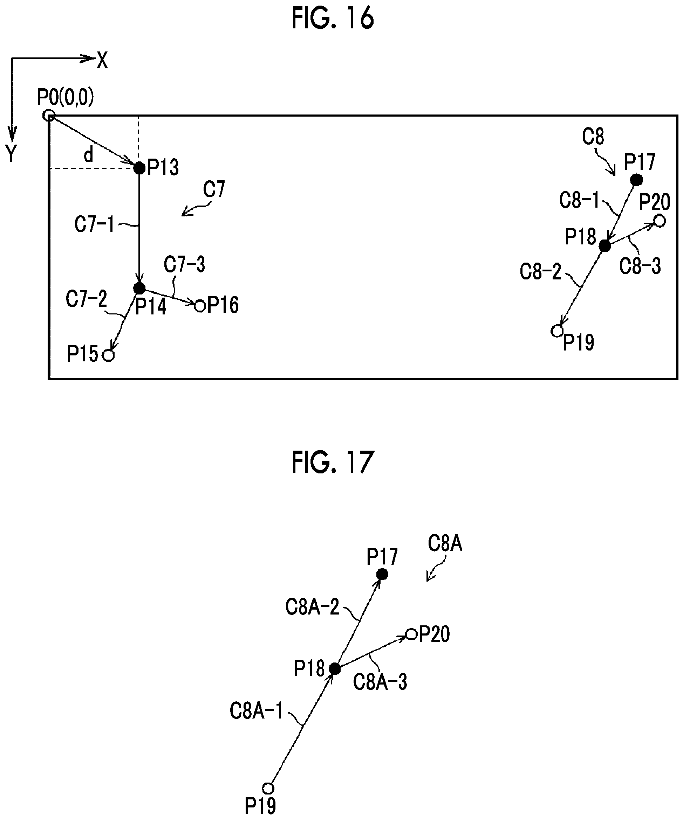

When the damage vector is generated, for example, a feature point of the deck 2 is set as an origin of a coordinate system, an end point at which a distance from the origin is minimized is set to a first start point for the group of damage vectors (vector group), and then, a start point and an end point can be sequentially determined in a traveling direction of the damage vector. In the example of Fig. 16, in a case where a point P0 on the deck 2 is the origin of the coordinate system, and a right direction and a downward direction in Fig. 16 are an X-axis direction and a Y-axis direction of the coordinate system, a points P13 at which the distance d from the point P0 is the shortest among points P13, P14, P15, and P16 of a vector group C7 can be set as a start point of a damage vector C7-1, the point P14 can be set as an end point of the damage vector C7-1 (and a start point of the damage vectors C7-2 and C7-3), and then, the points P15 and P16 can be set as an end point of the damage vectors C7-2 and C7-3.

However, in a case where a start point of a vector group C8 is determined using the same scheme, a point P17 is a start point of a damage vector C8-1, a point P18 is a start point of damage vectors C8-2 and C8-3, and a traveling direction of the damage vector C8-3 (a direction from the point P18 to the point P20) is opposite to a traveling direction of the damage vector C8-1. Therefore, in such a case, as illustrated in Fig. 17, a point P19 may be set as a start point of a damage vector C8A-1, a point P18 may be set as an end point of the damage vector C8A-1 (and a start point of damage vectors C8A-2 and C8A-3), and points P17 and P20 may be set as end points of the damage vectors C8A-2 and C8A-3, respectively. It should be noted that a set of damage vectors in this case is indicated as a vector group C8A. Such a process may be performed by the vectorization unit 122A without an instruction input from the user or may be performed by the vectorization unit 122A on the basis of the instruction input from the user via the operation unit 106.

### <Connection of separated damage vectors>

In a case where the damage vector is generated as described above, in a case where the damage is continuous within the deck 2, but separated on the surface, the damage vector is likely to be recognized as a separate damage vector. Therefore, in the computer device 10 according to the embodiment, one or a plurality of vectors are generated by connecting such a plurality of damage vectors.

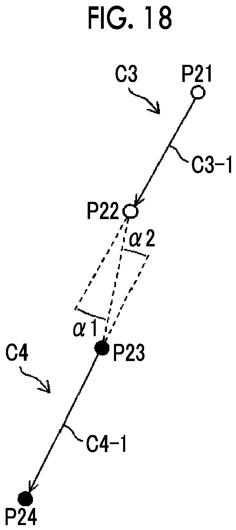

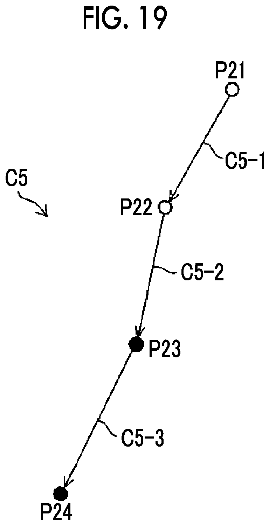

Fig. 18 is a diagram illustrating an example of connection of damage vectors and illustrates a situation in which a vector group C3 including a damage vector C3-1 (a point P21 and a point P22 are a start point and an end point, respectively) and a vector group C4 including a damage vector C4-1 (a point P23 and a point P24 are a start point and an end point, respectively) have been extracted. Further, an angle formed between the damage vector C3-1 and a line segment connecting the points P22 and P23 is α1, and an angle between the damage vector C4-1 and the line segment connecting the points P22 and P23 is α2. In this case, in a case where both the angle αl and the angle α2 are equal to or smaller than a threshold value, the damage vectors C3-1 and C4-1 are connected to each other and the vector groups C3 and C4 are merged. More specifically, as illustrated in Fig. 19, a new damage vector C5-2 is generated and connected to other damage vectors C5-1 (which is the same as the damage vector C3-1) and C5-3 (which is the same as the damage vector C4-1), and a new vector group including the damage vectors C5-1, C5-2, and C5-3 is set as a vector group C5.

It should be noted that the above-described scheme is an example of a damage vector connection scheme, and other methods may be used. The determination may be made as to whether or not to connect the damage vectors as described above by the damage information generation unit 122 without depending on the instruction input from the user or may be made as to whether or not to connect the damage vectors as described above by the damage information generation unit 122 on the basis of the instruction input from the user via the operation unit 106.

Thus, in the computer device 10 according to the embodiment, it is possible to accurately recognize a connection relationship between the damage vectors by appropriately connecting the damage vectors separated spatially (on the surface of the deck 2).

### <Generation of Hierarchical Structure Information>

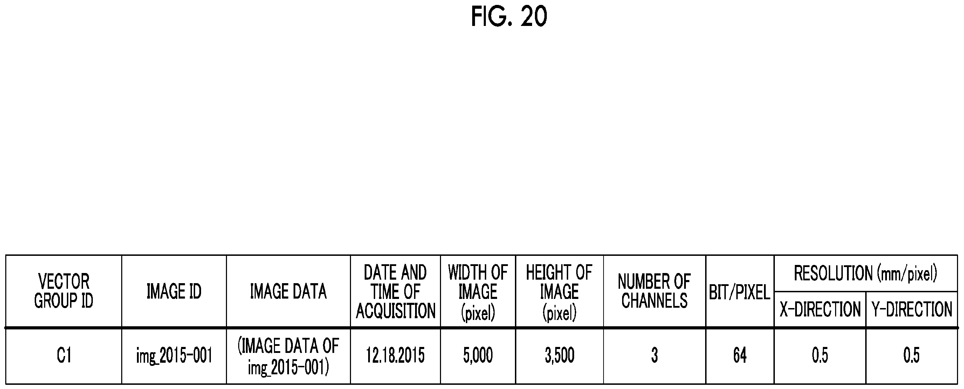

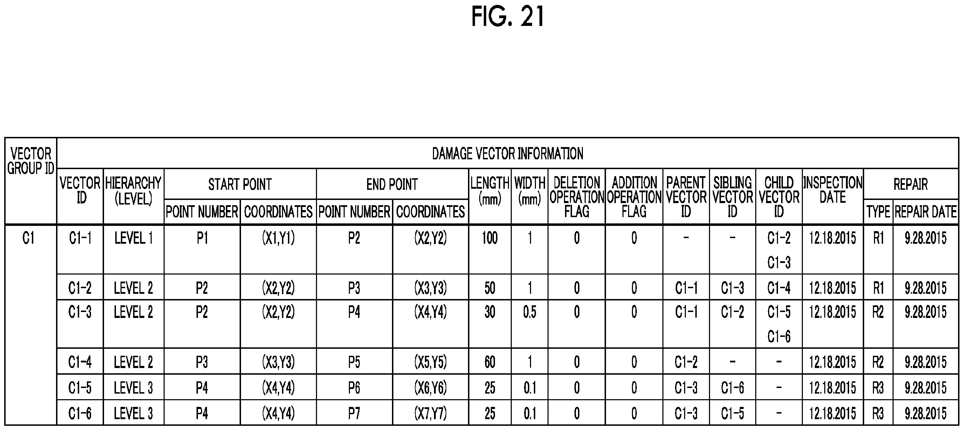

In a case where the damage vector is generated by the vectorization unit 122A, the hierarchical structure information generation unit 122C generates hierarchical structure information on the basis of the generated damage vector. The hierarchical structure information is hierarchy information representing a connection relationship between the damage vectors, and includes the image information (see Fig. 20) and the damage vector information (see Figs. 21, 24, 28, and 30). The image information and the damage vector information are associated via a vector group which is a set of damage vectors (crack vectors). Therefore, it is also possible to extract the damage vector by referring to identification (ID) of the vector group from the damage image, and conversely extract the image on the basis of the damage vector. Since the hierarchical structure information is generated in the same item and format regardless of a hierarchy (a level) to which the damage vector belongs (see Figs. 21, 24, 28, and 30), the user can easily recognize and recognize the hierarchical structure information.

### <Image information>

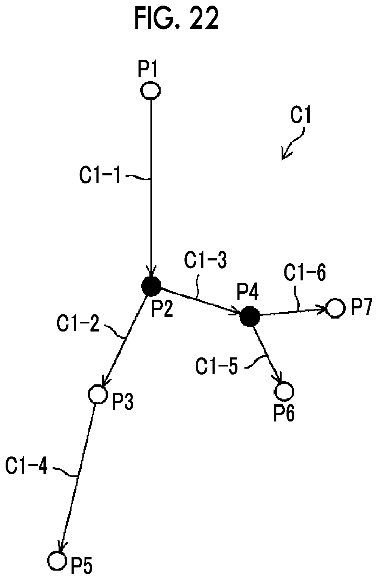

The above-described image information is information on the captured image in which the damage has been captured, and is information in which identification information (ID) and image data of the captured image, a date and time of image acquisition, and the like are defined for a group of damage vectors. Fig. 20 is a table showing an example of image information, in which an ID of an image, image data, a date and time of acquisition, a width and a height of the image, the number of channels, bit/pixel, and resolution have been defined for the vector group C1 (see Fig. 22). The number of channels is three for RGB (R: red, G: green, B: blue) color images, and is one for monochrome images. It should be noted that only the vector group C1 is described in Fig. 20, but the same information is generated for each group in a case where there are a plurality of vector groups.

### <Damage Vector Information>

Fig. 21 illustrates an example of the damage vector information. The damage vector information includes information on a vector group to which the damage vector belongs, unique information on each damage vector, information on another damage vector connected to each damage vector in the vector group, and additional information.

The information on the vector group (vector group C1 in the case of the table of Fig. 21; see Fig. 22) includes an ID of the group. Unique information of the damage vector includes an identification information (ID) of the damage vector, a hierarchy (level: affiliation hierarchy information), a start point and an end point (a point number and position coordinates), and a length. Here, level 1 is the highest level (level), and as the number increases, the level becomes lower. Details of a specific hierarchy determination scheme will be described below. The information on other damage vectors includes identification information (ID) of a parent vector, a sibling vector, and a child vector, as described below. The additional information includes a width of the damage, a deletion operation flag, an addition operation flag, an inspection date, and a repair information.

### <Parent Vector, Sibling Vector, and Child Vector>

In the embodiment, in a case where an end point of one damage vector is a start point of another damage vector, the one damage vector is referred to as "a parent vector", and the other damage vector is referred to as a "child vector". It is assumed that the number of parent vectors is determined to be zero or one for one damage vector, but there may be any number of child vectors equal to or greater than zero for one parent vector. Also, in a case where the end point of the parent vector is a start point of a plurality of child vectors, the plurality of child vectors are referred to as "sibling vectors" from each other. There may be any number of sibling vectors equal to or greater than zero.

Thus, in the embodiment, identification information (IDs) of the parent vector, the sibling vector, and the child vector are included in the hierarchical structure information, and therefore, the parent vector, the sibling vectors, and the child vectors can be sequentially specified by referring to the IDs of the vectors on the basis of any damage vector. For example, it is possible to specify a parent vector of a certain damage vector and further specify a child vector of that parent vector. Thus, in the computer device 10 according to the embodiment, it is possible to easily recognize the connection relationship between the damage vectors and to easily perform analysis and search of the damage vectors.

### <Additional information (attribute information)>

The "width" included in the additional information indicates the width of the cracks corresponding to each damage vector. The deletion operation flag indicates whether or not the vector is a vector on which a deletion operation has been performed, and is "1" in a case where the deletion operation has been performed and "0" in a case where the deletion operation has not been performed. By referring to this deletion operation flag, it is possible to switch between display and non-display of the damage vector. The addition operation flag is related to a detection aspect of the damage vector, and is "0" in a case in a case where the vector is an automatically detected vector, "1" in a case where the vector is a vector added manually (by an instruction input from the user), and"2" in a case where the vector is a vector added manually and generated by connecting vectors of different IDs.

A date on which the damaged image has been captured is set in in "Inspection date", but the date can be edited by an instruction input from the user via the operation unit 106. Further, information on "Repair" can be generated on the basis of the instruction input (a type of repair and a repair date) from the user via the operation unit 106. Examples of the type of repair include filling with cement, filling with resin, and leaving (follow-up observation) (described as Rl, R2, and R3 respectively in the table of Fig. 21).

### <Hierarchy of Damage Vector>

Next, a hierarchy (level) to which the damage vector belongs will be described. The hierarchy of the damage vector can be determined using various schemes, for example, as described in Examples 1 to 4 below.

### <Hierarchy Determination Scheme (Example 1)>

Fig. 22 is a diagram illustrating the vector group C1. The vector group C1 includes damage vectors C1-1 to C1-6, and the damage vectors have points P1 to P7 as start points or end points. Under such a situation, in Example 1, it is assumed that the hierarchy becomes lower each time the damage vector branches (an end point of a certain damage vector is a start point of a plurality of other damage vectors). Specifically, the hierarchy of the damage vector C1-1 is set as the highest "level 1", and a hierarchy of damage vectors C1-2 and Cl-3 in which the point P2 serving as the end point of the damage vector C1-1 is set as the start point is set to be at "level 2" which is lower than the damage vector C1-1. Similarly, a hierarchy of the damage vectors C1-5 and C1-6 in which point P4 which is the end point of the damage vector C1-3 is set as a start point is set to be at "level 3" which is lower than the damage vector Cl-3. On the other hand, since the point P3 which is the end point of the damage vector C1-2 is set as the start point of the damage vector C1-4, but the damage vector in which the point P3 is the start point is only the damage vector Cl-4 and there is no branch, the hierarchy of the damage vector Cl-4 is set to be at "level 2" that is the same as that of C1-2. The hierarchy of each damage vector determined in this way is included in the hierarchical structure information as shown in the table of Fig. 21.

### <Hierarchy Determination Scheme (Example 2)>

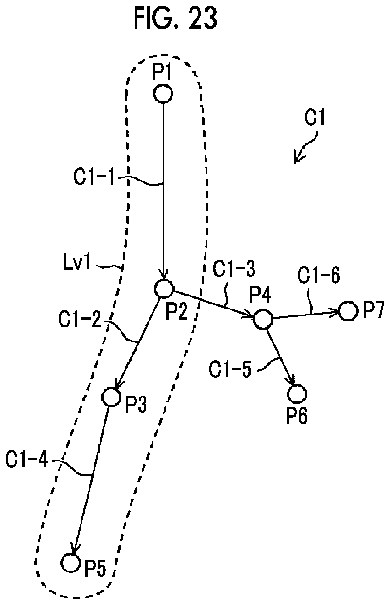

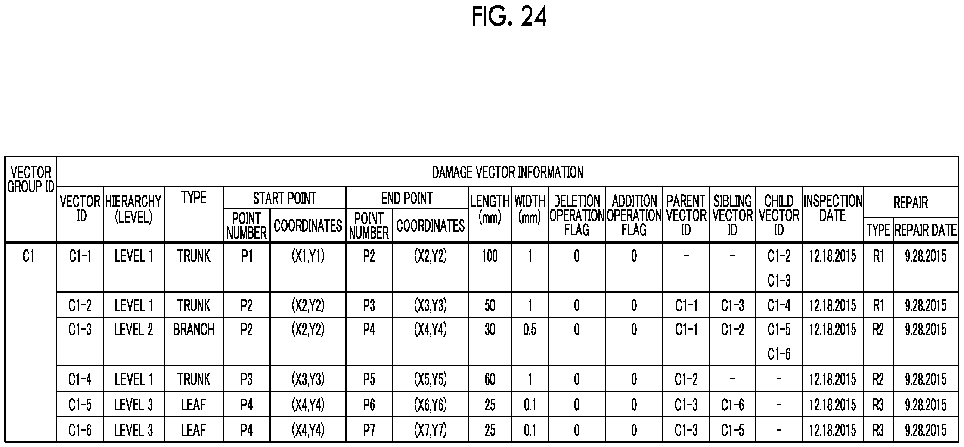

Fig. 23 is a diagram illustrating a vector group C1 (a connection relationship between damage vectors is the same as that illustrated in Fig. 22). In Example 2, it is assumed that one of the damage vectors to be connected of which an angle formed with respect to another damage vector is equal to or smaller than the threshold value (a damage vector corresponding to a "trunk" in a tree structure) belong to the same hierarchy. Specifically, damage vectors C1-1, C1-2, and C1-4 present within a dotted line (a range indicated by a reference symbol Lv1) in Fig. 23 are set to "level 1" (the highest level) which is the same hierarchy. Further, for other damage vectors C1-3, C1-5, and Cl-6, the hierarchy becomes lowered each time the damage vector branches as in Example 1, the damage vector C1-3 (corresponding to a "branch" in the tree structure) is set to a "level 2", and the damage vectors C1-5 and Cl-6 (corresponding to "leaves" in the tree structure) are set to "level 3". The hierarchy and the type (a trunk, a branch, or a leaf) of each damage vector determined in this way are included in the hierarchical structure information as shown in the table of Fig. 24.

### <Hierarchy Determination Scheme (Modification Example of Example 2)>

A modification example of the above-described hierarchy determination scheme (example 2) will be described. As in the hierarchy determination scheme (Example 2), in a case where the hierarchy is determined on the assumption that the damage vector corresponds to a trunk, a branch, and a leaf in a tree structure, it is generally considered that the "branch" is shorter than the "trunk", and therefore, the hierarchy may be determined by setting the longest damage vector as a "truck" (level 1) and other damage vectors as "branches" or "leaves". In this case, for example, in the damage vector information shown in the table of Fig. 24, the damage vector C1-1 having a length of 100 mm becomes "trunk" (level 1). The damage vectors Cl-2 and Cl-3 can be set as "branches" (level 2), the damage vectors Cl-4 can be set as "branches" (level 2) or "leaves" (level 3), and the damage vectors C1-5 and 6 can be set as "leaves" (level 3).

It should be noted that the damage vector constituting "longest cracks" rather than the "longest damage vector" may be set as a "trunk" (level 1), and the damage vectors corresponding to the cracks branching from the "trunk" may be set as "branches" or "leaves". In this case, the "longest crack" is assumed to mean that "in a state in which a thick crack and a thin crack are both connected, the crack is longest".

Also, a type (a trunk, a branch, and a leaf) and a hierarchy may be determined in consideration of a width (a width of the damage corresponding to the damage vector) in addition to a length of the damage vector. For example, the hierarchy may be determined by setting the damage vector of which "length × width" is maximized as a "trunk" and setting the other damage vector as a "branch" or a "leaf'. In this case, for example, in the damage vector information shown in the table of Fig. 24, the damage vector C1-1 with "length × width" being the maximum (100 mm²) is "trunk". The damage vectors C1-2 and C1-3 can be set as "branches" (level 2), damage vector Cl-4 can be set as a "branch" (level 2), or a "leaf' (level 3), and the damage vectors C1-5 and 6 can be set as "Leaves" (level 3).

It is possible to improve accuracy of hierarchization by determining the hierarchy of the damage vector in consideration of the length of the damage vector or "length × width", as in the above-described modification example.

### <Hierarchy Determination Scheme (Example 3)>

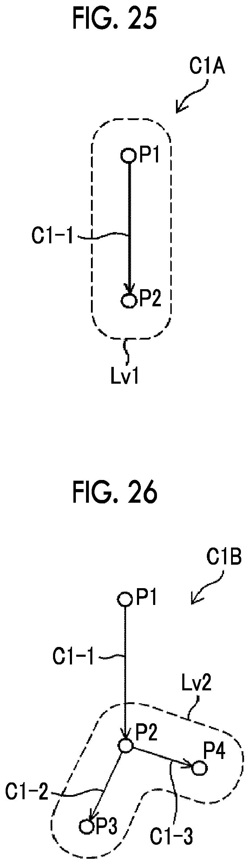

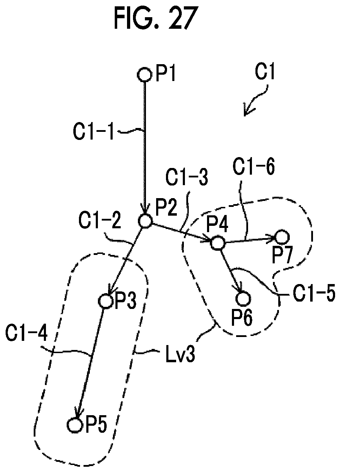

Figs. 25 to 27 are diagrams illustrating the vector group C1 (a connection relationship between damage vectors is the same as those illustrated in Figs. 22 and 32). In Example 3, a time before and after occurrence of the damage vector is determined on the basis of the imaging date and time for the image of the bridge 1, and as the damage vector occurs later in time, the damage vector belongs to the lower hierarchy. In the case of Figs. 25 to 27, the vector group C1A including the damage vector C1-1 is generated in the first captured image (Fig. 25), the damage vectors C1-2 and C1-3 are newly generated and form a vector group C1B in the next captured image (Fig. 26), and damage vectors C1-4, Cl-5, and Cl-6 are further generated and form the vector group C1 in the last captured image (Fig. 27).

In such a situation, in Example 3, the damage vector C1-1 (a range indicated by a reference numeral Lv1 in Fig. 25) occurring in the first image is at the highest "level 1", the damage vectors C1-2 and C1-3 occurring in the next image (a range indicated by a reference symbol Lv2 in Fig. 26) are at "level 2", and the damage vectors Cl-4, Cl-5, and C1-6 occurring in the last image (a range indicated by a reference symbol Lv3 in Fig. 27) is at "level 3".

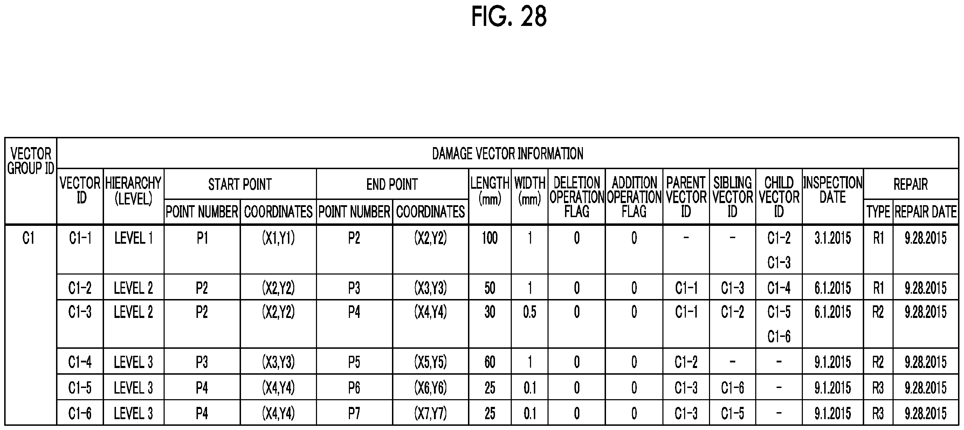

The hierarchy of each damage vector determined in this way is included in the hierarchical structure information as shown in the table of Fig. 28.

### <Hierarchy Determination Scheme (Example 4)>

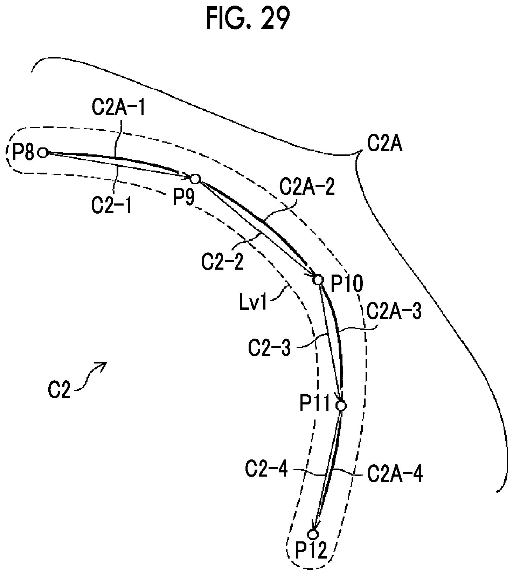

Fig. 29 is a diagram illustrating a crack C2A and a corresponding vector group C2. In Example 4, in a case where there is only another damage vector connected to one damage vector, it is assumed that such other damage vector belongs to the same hierarchy as the one damage vector. More specifically, a case where one curved crack C2A is divided into a plurality of cracks C2A-1 to C2A-4, and the cracks correspond to damage vectors C2-1 to C2-4 having points P8 to P12 as start points or end points, respectively, as illustrated in Fig. 29, is considered, only one damage vector (damage vectors C2-2 to C2-4) is connected to an end point of the damage vectors C2-1 to C2-3. In such a case, in Example 4, the damage vectors C2-1 to C2-4 (a range indicated by reference symbol Lv1 in Fig. 29) are considered to be substantially one damage vector and are all assumed to belong to "level 1" (the highest level) that is the same hierarchy.

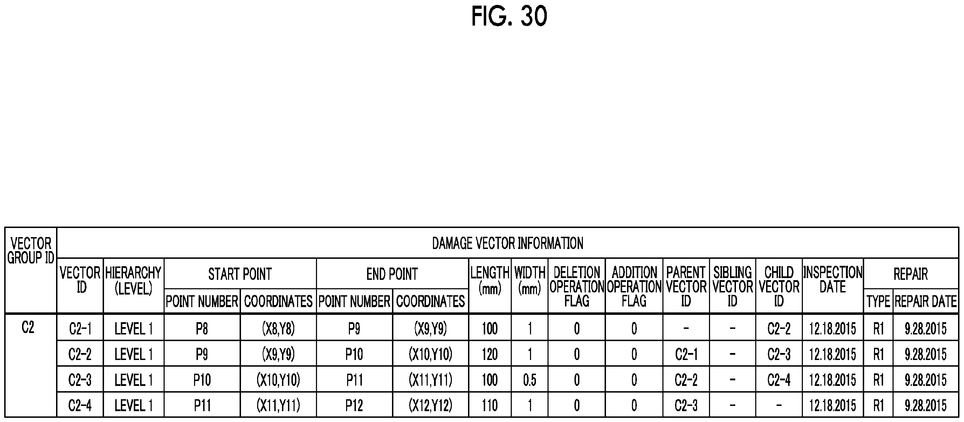

The hierarchy of each damage vector determined in this way is included in the hierarchical structure information as shown in the table of Fig. 30.

Although Examples 1 to 4 of the affiliation hierarchy determination scheme of the damage vector have been described above, the schemes can be appropriately used according to a specific aspect of damage and a plurality of schemes may be used in combination, as necessary. For example, for a group of damage vectors having a complex connection pattern, the hierarchy may be determined for a certain part using Example 1, and the hierarchy may be determined for another part using Example 4. Such a combination of the hierarchy scheme may be determined and performed by the hierarchical structure information generation unit 122C or may be performed on the basis of an instruction input from the user via the operation unit 106.

### <Item and Format of Hierarchical Structure Information>

In the embodiment, as shown in the tables of Figs. 21, 24, 28, and 30, since the hierarchical structure information has the same item and format regardless of the hierarchy to which the damage vector belongs, a connection relationship between damage vectors can be recognized quickly and easily.

### <Extraction of Damage Vectors>

Next, extraction of damage vectors will be described. In the embodiment, since the hierarchical structure information includes, for example, a vector group to which the damage vector belongs, an identification number (ID) of the damage vector, an affiliation hierarchy, and IDs of other damage vectors (a parent vector, a sibling vector, and a child vector) to be connected (see Figs. 21, 24, 28, and 30), it is possible to designate a desired condition for the items and extract the damage vector. Examples of the condition to be designated can include "a hierarchy to which a damage vector belongs" and "a vector in which a specific vector is set as a parent vector, a sibling vector, or a child vector", but the condition that can be designated is not limited to such examples.

For example, in the case of the damage vector information illustrated in Fig. 21, in a case where "a hierarchy (level) of the damage vector is at level 2" is designated as the condition, the damage vectors C1-2, C1-3, and C1-4 are extracted by referring to a column "hierarchy (level)" of the hierarchical structure information, and in a case where "a damage vector connected to the damage vector C1-2 and belonging to a hierarchy higher than the damage vector Cl-2" is designated as the condition, the damage vector C1-1 (the parent vector) is extracted. Further, in a case where "a damage vector connected to the damage vector C1-2 and belonging to a hierarchy that is the same as that of the damage vector C1-2" is designated as the condition, the damage vector C1-3 (the sibling vector) and the damage vector C1-4 (the child vector) are extracted, and in a case where "a damage vector connected to the damage vector C1-3 and belonging to a hierarchy lower than that of the damage vector C1-3" is designated as the condition, the damage vectors C1-5 and C1-6 (the child vectors) are extracted. Such extraction of the damage vectors is performed by the damage extraction unit 120 on the basis of an instruction input from the user via the operation unit 106.

Thus, in the computer device 10, it is possible to easily perform the search, the analysis, and the evaluation of the damage vectors. It should be noted that the extracted damage vector can be displayed in the format of individual information and/or line drawing (to be described below).

### <Display of Damage Vector and Hierarchical Structure Information>

The hierarchical structure information is displayed on the display unit 104. The display of the hierarchical structure information can be performed in the format of tables illustrated in Figs. 20, 21, 24, 28, or 30 or can be performed using information on a part extracted from the tables. One example of such "information on a part" may include "information on damage vectors extracted under a designated condition" and "information on a specific item such as an inspection date and/or a repair date".

In addition, a line drawing indicating the damage vector may be drawn on the basis of the hierarchical structure information and displayed on the display unit 104. As shown in the tables of Figs. 21, 24, 28, and 30, since the hierarchical structure information includes information on the start point and the end point of the damage vector, and information on another damage vector to be connected, line drawings (for example, see Figs. 22, 23, and 25 to 27) indicating the damage vectors can be drawn on the basis of such information and displayed. An arrow may be attached to the line drawing showing the damage vector so that the direction of the damage vector (the direction from the start point to the end point) can be identified (see Figs. 22, 23, and 25 to 27). In a case where the line drawing of the damage vector is drawn and displayed, all damage vectors included in the hierarchical structure information may be drawn and displayed, or only some (for example, damage vectors extracted under the conditions designated as described above) of the damage vectors may be displayed.

It should be noted that in a case where the line drawing indicating the damage vector is displayed, display conditions such as color, a thickness, and a line type (solid line, dotted line, or the like) of the damage vector are changed according to specific information among the information included in the hierarchical structure information. Examples of such information can include a hierarchy (level), a type (trunk, branch, and leaf), and an occurrence date and time of the damage vector, a deletion operation flag, and a value of an addition operation flag, and may be appropriately set from among items included in the hierarchical structure information. By performing the display in an aspect according to features of the damage vector in this way, it is possible to easily recognize the connection relationship between damage vectors and/or the state of temporal change.

Any one of the line drawing of the damage vector and the hierarchical structure information may be displayed, or both of the line drawing of the damage vector and the hierarchical structure information may be displayed at the same time. Further, an image obtained by imaging damage (cracks) in the above-described display (for example, an image "img_2015-001" shown in the table of Fig. 20) may be displayed to be superimposed on or side by side with the line drawing of the damage vector such that the image and the line drawing can be compared (see, for example, Fig. 29).

In this embodiment, since the damage vector and/or the hierarchical structure information is displayed in this way, it is possible to easily recognize the damage vector information and the connection relationship between the damage vectors.

### <Recording of Damage Vector and Hierarchical Structure Information>

The hierarchical structure information is recorded in the database 30. The recorded hierarchical structure information can be used for purposes such as analysis and evaluation of the damage. It should be noted that, in a case where some information (for example, the damage vector satisfying the designated condition) is extracted from the hierarchical structure information, the information extracted in this way is all included in the original hierarchical structure information, and therefore, an extraction result is not necessarily recorded, but recording of the extraction result in the database 30 enables the extraction result to be rapidly referred to, as necessary.

### <Correction of Hierarchical Structure Information>

As described above, in the embodiment, the hierarchical structure information generation unit 122C generates the hierarchical structure information, but the hierarchical structure information generation unit 122C corrects the hierarchical structure information on the basis of the instruction input from the user via the operation unit 106.

As described above, according to the computer device 10 and the information processing method of this example, it is possible to easily recognize the connection relationship between the damage vectors and to easily perform the analysis and/or search of the damage vectors on the basis of the hierarchical structure information.

### <Conclusion of Hierarchical Structure Information>

The hierarchical structure information generated by the hierarchical structure information generation unit 122C is information hierarchically representing the connection relationship between the damage vectors.

It is preferable that the hierarchical structure information generated by the hierarchical structure information generation unit 122C includes the information on a vector group to which one damage vector belongs, the information on another damage vector connected to the one damage vector, and unique information of the one damage vector.

In Example 1 of the hierarchical structure information, the hierarchical structure information generation unit 122C generates the hierarchical structure information in which, in a case where a plurality of other damage vectors are connected to one damage vector, the plurality of other damage vectors belong to a hierarchy lower than that of the one damage vector.

In Example 2 of the hierarchical structure information, the hierarchical structure information generation unit 122C generates hierarchical structure information in which, in a case where the angle between one damage vector and another damage vector connected to the one damage vector is equal to or smaller than the threshold value, the other damage vector belongs to the same hierarchy as the one damage vector.

In Example 3 of the hierarchical structure information, the hierarchical structure information generation unit 122C generates hierarchical structure information in which, in a case where another damage vector connected to one damage vector is a damage vector that has occurred later in time than the one damage vector, the other damage vector belongs to the hierarchy lower than the one damage vector.

In Example 4 of the hierarchical structure information, the hierarchical structure information generation unit 122C generates hierarchical structure information in which, in a case where there is only another damage vector connected to one damage vector, the other damage vector belongs to the same hierarchy as that of the one damage vector.

The unique information includes identification information of one damage vector, affiliation hierarchy information indicating which hierarchy of the hierarchical structure the damage vector belongs to (also referred to as "hierarchical identification information"), and positions of the start point and the end point.

The hierarchical structure information generation unit 122C generates the hierarchical structure information with the same item and format regardless of the hierarchy to which the damage vector belongs.

Similar damage information can be easily searched for using the hierarchical structure information. This is because it is generally difficult to determine whether or not damages are similar since the damages have a property of progressing in chronological order, but it becomes possible to designate and search for vectors on the designated hierarchy or an upper hierarchy (for example, only vectors at levels 1 and 2) using hierarchical structure information.

Although the embodiments for carrying out the present invention have been described above, the present invention is not limited to the above-described embodiments and various modification examples are possible without departing from the scope of the invention, which is defined by the appended claims.

### Explanation of References

1: structure
2: deck
3: main girder
3A: joint
10: computer device
20: imaging device
30: database
102: external input and output unit
104: display unit
106: operation unit
108: storage unit
110: CPU
120: damage extraction unit
122: damage information generation unit
122A: vectorization unit
122B: relative angle calculation unit
122C: hierarchical structure information generation unit
122D: correction unit
122E: relative direction information generation unit
122F: vector connection unit
122G: attribute information addition unit
124: damage analysis unit
126: database control unit
128: search unit
130: damage progress speed acquisition unit
132: measure determination unit
134: soundness diagnosis unit
136: maintenance and management planning unit
152: progress model generation unit
154: progress model subdivision unit

## Claims

1. An information processing device (10) comprising:
a damage extraction unit (120) adapted to extract damage from an image of an inspection target structure (1);
a damage information generation unit (120) adapted to generate damage information including a set of one or more 2D vectors obtained by vectorizing the damage;
a progress model acquisition unit (102) adapted to acquire a progress model indicating a correspondence relationship between a damaged state of a model structure and a degree of damage that is an evaluation classification of a degree of damage progress, wherein a damaged state of a model structure is a geometrical description of a model structure damage;
a damage analysis unit (124) adapted to analyze at least the set of one or more 2D vectors in the damage information of the inspection target structure (1) on the basis of the one or more damaged state indicated in the progress model and to determine the degree of damage of the inspection target structure (1) corresponding to the damaged state of the inspection target structure (1);
a database control unit (126) adapted to store the degree of damage of the inspection target structure (1) in a database (30);
a damage progress speed acquisition unit (130) adapted to acquire a damage progress speed of the inspection target structure by comparing a plurality of degrees of damage respectively acquired on the basis of a plurality of images with different inspection times of the inspection target structure, and
wherein the database control unit (126) is adapted to store the damage progress speed in the database in association with the damage information and the degree of damage,
**characterized in that** the information processing device further comprises:
a search unit (128) adapted to search the database (30) for similar damage information which is another damage information similar to the damage information of the inspection target structure (1),
wherein, in a case where a degree of damage of the inspection target structure at a time earlier than the latest inspection time of the inspection target structure is not present in the database, the damage progress speed acquisition unit (130) is adapted to estimate a damage progress speed of the inspection target structure using the damage progress speed stored in the database (30) in association with the similar damage information.

2. The information processing device (10) according to claim 1, wherein said search unit (128) is further adapted to search the database (30) in which a damage progress parameter affecting damage progress and inspection result information of a structure other than the inspection target structure are stored in association with each other, for inspection result information of the other structure of which the damage progress parameter is the same as or similar to that of the inspection target structure, wherein the inspection result information includes at least one of captured image, damage information, degree of damage, or damage progress speed; and the information processing device further comprises
a progress model generation unit (152) adapted to generate a progress model corresponding to the damage progress parameter of the inspection target structure using the inspection result information of the other structure that has been searched for.

3. The information processing device (10) according to claim 2, wherein the damage progress parameter of the inspection target structure includes at least one of natural environment information on a natural environment of the inspection target structure, usage situation information on a usage situation of the inspection target structure, structure information on a structure of the inspection target structure, material information on a material of the inspection target structure, medicine information on a medicine assigned to the inspection target structure, or maintenance and management record information on a repair record and a reinforcement record of the inspection target structure.

4. The information processing device (10) according to claim 1, wherein, in a case where a degree of damage of the inspection target structure (1) at a time earlier than the latest inspection time of the inspection target structure is not present in the database (30), the damage progress speed acquisition unit (130) is adapted to estimate damage progress speed of the inspection target structure (1) at the latest inspection time of the inspection target structure or at the time earlier than the latest inspection time using at least one of the damage progress speed or the degree of damage associated with the similar damage information in the database.

5. The information processing device (10) according to any one of claims 1 to 4, wherein the damage information generation unit (122) is adapted to generate the damage information including at least one of hierarchical structure information on a hierarchical structure of the set of one or more 2D vectors or relative direction information on a direction of the inspection target structure and the set of one or more 2D vectors.

6. The information processing device (10) according to claim 5, wherein the damage information generation unit (122) is adapted to generate the hierarchical structure information including information on a vector group to which one damage vector of the set of one or more 2D vectors belongs, information on another damage vector of the set of one or more 2D vectors connected to the one damage vector, and unique information of the one damage vector.

7. The information processing device (10) according to any one of claims 1 to 6, wherein the damage information generation unit (122) is adapted to generate one vector by connecting a plurality of spatially separated vectors to each other.

8. The information processing device (10) according to any one of claims 1 to 7, further comprising:
a correction unit (122) adapted to perform association between coordinate positions and directions of the vectors respectively generated from the plurality of images by performing geometrical correction on at least one of a plurality of images having different inspection times or the vectors generated from the plurality of images.

9. The information processing device (10) according to any one of claims 1 to 8, further comprising a progress model subdivision unit (154) adapted to subdivide the damaged state and the degree of damage of the progress model corresponding to the determined degree of damage on the basis of at least the set of one or more D2 vectors in the damage information of the inspection target structure (1).

10. The information processing device (10) according to any one of claims 1 to 9, further comprising:
a measure determination unit (132) adapted to determine measures against damage of the inspection target structure (1) on the basis of the degree of damage and the damage progress speed acquired on the basis of the damage information on the inspection target structure.

11. The information processing device (10) according to claim 10, further comprising:
a maintenance and management planning unit (136) adapted to generate plan information for maintenance and management including at least one of repair or reinforcement of the inspection target structure on the basis of at least the damage progress speed and the measures.

12. An information processing method comprising:
a step of extracting damage from an image of an inspection target structure (1);
a step of generating damage information including a set of one or more 2D vectors obtained by vectorizing the damage;
a step of acquiring a progress model indicating a correspondence relationship between a damaged state of a model structure and a degree of damage that is an evaluation classification of a degree of damage progress, wherein a damaged state of a model structure is a geometrical description of a model structure damage;
a step of analyzing at least the set of one or more 2D vectors in the damage information of the inspection target structure (1) on the basis of the one or more damaged state indicated in the progress model and determining a degree of damage of the inspection target structure corresponding to the damaged state of the inspection target structure (1);
a step of acquiring a damage progress speed of the inspection target structure by comparing a plurality of degrees of damage respectively acquired on the basis of a plurality of images with different inspection times of the inspection target structure,
a step of storing the damage progress speed into a database (30) in association with the damage information and the degree of damage of the inspection target structure (1);
**characterized in that** the information processing method further comprises a step of searching the database (30) for similar damage information which is another damage information similar to the damage information of the inspection target structure (1),
wherein, in a case where a degree of damage of the inspection target structure at a time earlier than the latest inspection time of the inspection target structure is not present in the database, the step of acquiring a damage progress speed estimates a damage progress speed of the inspection target structure using the damage progress speed stored in the database in association with the similar damage information.

## Patentansprüche

1. Informationsverarbeitungsvorrichtung (10), umfassend:
eine Schadenextraktionseinheit (120), ausgebildet zum Extrahieren von Schaden aus einem Bild einer Prüfzielstruktur (1);
eine Schadensinformations-Erzeugungseinheit (120), ausgebildet zum Erzeugen von Schadensinformation, die eine Menge von einem oder mehreren 2D-Vektoren enthält, die durch Vektorisierung des Schadens gewonnen wurden;
eine Fortschrittsmodell-Erfassungseinheit (102), ausgebildet zum Erfassen eines Fortschrittsmodells, welches eine Entsprechungsbeziehung zwischen einem geschädigten Zustand einer Modellstruktur und einem Maß eines Schadens, das ist eine Bewertungsklassifikation eines Maßes des Schadenfortschritts, angibt, wobei der beschädigte Zustand einer Modellstruktur eine geometrische Beschreibung eines Modellstrukturschadens ist;
eine Schadensanalyseeinheit (124), ausgebildet zum Analysieren zumindest der Menge aus einem oder mehreren 2D-Vektoren in der Schadensinformation der Prüfzielstruktur (1) auf der Grundlage des einen oder mehrerer beschädigter Zustände, welche in dem Fortschrittsmodell angegeben sind, und zum Bestimmen des Maßes eines Schadens der Prüfzielstruktur (1) entsprechend dem beschädigten Zustand der Prüfzielstruktur (1);
eine Datenbanksteuereinheit (126), ausgebildet zum Speichern des Schadensmaßes der Prüfzielstruktur (1) in einer Datenbank (30);
eine Schadensfortschritt-Geschwindigkeitserfassungseinheit (130), ausgebildet zum Erfassen einer Schadensfortschrittgeschwindigkeit der Prüfzielstruktur durch Vergleichen einer Mehrzahl von Schadensmaßen, die auf der Grundlage einer Mehrzahl von Bildern mit unterschiedlichen Prüfzeiten der Prüfzielstruktur erfasst wurden, und
wobei die Datenbanksteuereinheit (126) ausgebildet ist zum Speichern der Schadensfortschrittgeschwindigkeit in der Datenbank in Verbindung mit der Schadensinformation und dem Schadensmaß,
**dadurch gekennzeichnet, dass** die Informationsverarbeitungsvorrichtung weiterhin aufweist:
eine Sucheinheit (128), ausgebildet zum Durchsuchen der Datenbank (30) nach Ähnlichkeits-Schadensinformation, bei der es sich um eine andere Schadensinformation handelt, die ähnlich ist der Schadensinformation der Prüfzielstruktur (1),
wobei für den Fall, dass ein Schadensmaß der Prüfzielstruktur zu einer Zeit früher als die letzte Prüfzeit der Prüfzielstruktur in der Datenbank nicht vorhanden ist, die Schadensfortschritts-Geschwindigkeitserfassungseinheit (130) ausgebildet ist zum Abschätzen einer Schadensfortschrittsgeschwindigkeit der Prüfzielstruktur unter Verwendung der in der Datenbank (30) in Zuordnung zu der ähnlichen Schadensinformation gespeicherten Schadensfortschrittsgeschwindigkeit.

2. Informationsverarbeitungsvorrichtung (10) nach Anspruch 1,
bei der die Sucheinheit (128) weiterhin ausgebildet ist zum Durchsuchen der Datenbank (30), in welcher ein Schadensfortschrittsparameter, der den Schadensfortschritt beeinflusst, und Prüfergebnisinformation einer von der Prüfzielstruktur verschiedenen Struktur in Zuordnung zueinander gespeichert sind, nach Prüfergebnisinformation der anderen Struktur, deren Schadensfortschrittsparameter der gleiche ist oder ähnlich ist dem der Prüfzielstruktur, wobei die Prüfergebnisinformation ein aufgenommenes Bild, Schadensinformation, Schadensmaß und/oder Schadensfortschrittgeschwindigkeit beinhaltet, und die Informationsverarbeitungsvorrichtung weiterhin umfasst:
eine Fortschrittsmodell-Erzeugungseinheit (152), ausgebildet zum Erzeugen eines Fortschrittmodells entsprechend dem Schadensfortschrittparameter der Prüfzielstruktur unter Verwendung der Prüfergebnisinformation der anderen Struktur, nach der gesucht wurde.

3. Informationsverarbeitungsvorrichtung (10) nach Anspruch 2,
bei der der Schadensfortschrittparameter der Prüfzielstruktur eine Information über die natürliche Umgebung der Prüfzielstruktur, Gebrauchsinformation über eine Gebrauchssituation der Prüfzielstruktur, Strukturinformation über eine Struktur der Prüfzielstruktur, Werkstoffinformation bezüglich eines Werkstoffs der Prüfzielstruktur, Medizininformation bezüglich einer der Prüfzielstruktur zugeordneten Medizin und/oder Wartungs- und Verwaltungsaufzeichnungsinformation bezüglich einer Reparaturaufzeichnung und einer Verstärkungsaufzeichnung der Prüfzielstruktur enthält.

4. Informationsverarbeitungsvorrichtung (10) nach Anspruch 1,
bei der für den Fall, dass ein Schadensmaß der Prüfzielstruktur (1) zu einer Zeit früher als die letzte Prüfzeit der Prüfzielstruktur in der Datenbank (30) nicht vorhanden ist, die Schadensfortschritt-Geschwindigkeitserfassungseinheit (30) ausgebildet ist zum Abschätzen der Schadensfortschrittgeschwindigkeit der Prüfzielstruktur (1) zu der letzten Prüfzeit der Prüfzielstruktur oder zu der Zeit früher als die letzte Prüfzeit, unter Verwendung der Schadenfortschrittsgeschwindigkeit und/oder des Schadensmaßes, die in Verbindung mit der Ähnlichkeitsschadensinformation in der Datenbank vorhanden ist.

5. Informationsverarbeitungsvorrichtung (10) nach einem der Ansprüche 1 bis 4,
bei der die Schadensinformations-Erzeugungseinheit (122) ausgebildet ist zum Erzeugen der Schadensinformation einschließlich einer hierarchischen Strukturinformation bezüglich der hierarchischen Struktur der Menge aus einem oder mehreren 2D-Vektoren und/oder Relativrichtungsinformation bezüglich einer Richtung der Prüfzielstruktur und der Menge aus einem oder mehreren 2D-Vektoren.

6. Informationsverarbeitungsvorrichtung (10) nach Anspruch 5,
bei der die Schadensinformations-Erzeugungseinheit (122) ausgebildet ist zum Erzeugen der hierarchischen Strukturinformation einschließlich Information über eine Vektorgruppe, zu der ein Schadensvektor der Menge aus einem oder mehreren 2D-Vektoren gehören, Information über einen weiteren Schadensvektor der Menge aus einem oder mehreren 2D-Vektoren, die mit dem einen Schadensvektor verbunden ist, und Sonderinformation bezüglich des einen Schadensvektors.

7. Informationsverarbeitungsvorrichtung (10) nach einem der Ansprüche 1 bis 6,
bei der die Schadensinformations-Erzeugungseinheit (122) ausgebildet ist zum Erzeugen eines Vektors durch Verbinden einer Mehrzahl räumlich getrennter Vektoren miteinander.

8. Informationsverarbeitungsvorrichtung (10) nach einem der Ansprüche 1 bis 7, weiterhin umfassend:
eine Korrektureinheit (122), ausgebildet zum Ausführen einer Zuordnung zwischen Koordinatenstellen und Richtungen der Vektoren, die aus den mehreren Bildern erzeugt wurden durch Ausführen einer geometrischen Korrektur an mindestens einem aus einer Mehrzahl von Bildern mit verschiedenen Prüfzeiten oder Vektoren, die aus den mehreren Bildern erzeugt wurden.

9. Infonnationsverarbeitungsvorrichtung (10) nach einem der Ansprüche 1 bis 8,
weiterhin umfassend eine Fortschrittsmodell-Unterteilungseinheit (154), ausgebildet zum Unterteilen des beschädigten Zustands und des Schadensmaßes des Fortschrittsmodell entsprechend dem festgestellten Schadensmaß, auf der Grundlage zumindest des Satzes aus einem oder mehreren 2D-Vektoren in der Schadensinformation der Prüfzielstruktur (1).

10. Informationsverarbeitungsvorrichtung (10) nach einem der Ansprüche 1 bis 9, weiterhin umfassend:
eine Maßnahmenbestimmungseinheit (132), ausgebildet zum Festlegen von Maßnahmen gegen Schaden der Prüfzielstruktur (1) auf der Grundlage des Schadensmaßes und der Schadensfortschrittsgeschwindigkeit, die auf der Grundlage der Schadensinformation bezüglich der Prüfzielstruktur erfasst werden.

11. Informationsverarbeitungsvorrichtung (10) nach Anspruch 10, weiterhin umfassend:
eine Wartungs- und Verwaltungsplanungseinheit (136), ausgebildet zum Erzeugen von Planungsinformation für die Wartung und die Verwaltung, enthaltend mindestens eine Reparatur oder eine Verstärkung der Prüfzielstruktur, auf der Grundlage von mindestens der Schadensfortschrittsgeschwindigkeit und der Maßnahmen.

12. Informationsverarbeitungsverfahren, umfassend:
einen Schritt des Extrahierens von Schaden aus einem Bild einer Prüfzielstruktur (1);
einen Schritt des Erzeugens von Schadensinformation, enthaltend eine Menge aus einem oder mehreren 2D-Vektoren, die durch Vektorisieren des Schadens gewonnen werden;
einen Schritt des Erfassens eines Fortschrittmodells, das eine Entsprechungsbeziehung zwischen einem beschädigten Zustand einer Modellstruktur und einem Schadensmaß angibt, bei dem es sich um eine Auswertungsklassifikation eines Maßes eines Schadensfortschritts handelt, wobei ein beschädigter Zustand einer Modellstruktur eine geometrische Beschreibung eines Modellstrukturschadens ist;
einen Schritt des Analysierens von mindestens der Menge aus einem oder mehreren 2D-Vektoren in der Schadensinformation der Prüfzielstruktur (1) auf der Grundlage des einen oder mehrerer beschädigter Zustände, die in dem Fortschrittsmodell angegeben sind, und Bestimmen eines Schadensmaßes der Prüfzielstruktur entsprechend dem beschädigten Zustand der Prüfzielstruktur (1);
einen Schritt des Erfassens einer Schadensfortschrittsgeschwindigkeit der Prüfzielstruktur durch Vergleichen einer Mehrzahl von Schadensmaßen, die auf der Grundlage mehrerer Bilder aus verschiedenen Prüfzeiten der Prüfzielstruktur erfasst wurden,
einen Schritt des Speicherns der Schadensfortschrittgeschwindigkeit in einer Datenbank (30) in Verbindung mit der Schadensinformation und dem Schadensmaß der Prüfzielstruktur (1);
**dadurch gekennzeichnet, dass** das Informationsverarbeitungsverfahren weiterhin aufweist: einen Schritt des Durchsuchens der Datenbank (30) nach ähnlicher Schadensinformation, bei der es sich um eine andere Schadensinformation ähnlich der Schadensinformation der Prüfzielstruktur (1) handelt,
wobei für den Fall, dass ein Schadensmaß der Prüfzielstruktur zu einer Zeit früher als die letzte Prüfzeit der Prüfzielstruktur in der Datenbank nicht vorhanden ist, der Schritt des Erfassens einer Schadensfortschrittsgeschwindigkeit eine Schadensfortschrittsgeschwindigkeit der Prüfzielstruktur unter Verwendung der Schadensfortschrittsgeschwindigkeit abschätzt, die in der Datenbank in Verbindung mit der ähnlichen Schadensinformation gespeichert ist.

## Revendications

1. Dispositif de traitement d'informations (10), comprenant :
une unité d'extraction de dégradation (120) apte à extraire une dégradation à partir d'une image d'une structure cible d'inspection (1) ;
une unité de génération d'informations de dégradation (120) apte à générer des informations de dégradation incluant un jeu d'un ou plusieurs vecteurs bidimensionnels obtenus en vectorisant la dégradation ;
une unité d'acquisition de modèle de progression (102) apte à acquérir un modèle de progression indiquant une relation de correspondance entre un état dégradé d'une structure de modèle et un degré de dégradation, lequel est une classification d'évaluation d'un degré de progression de dégradation, dans lequel un état dégradé d'une structure de modèle est une description géométrique d'une dégradation de structure de modèle ;
une unité d'analyse de dégradation (124) apte à analyser au moins le jeu d'un ou de plusieurs vecteurs bidimensionnels dans les informations de dégradation de la structure cible d'inspection (1) sur la base du un ou plusieurs états dégradés indiqués dans le modèle de progression, et déterminer le degré de détérioration de la structure cible d'inspection (1) correspondant à l'état dégradé de la structure cible d'inspection (1) ;
une unité de commande de base de données (126) apte à stocker le degré de dégradation de la structure cible d'inspection (1) dans une base de données (30) ;
une unité d'acquisition de vitesse de progression de dégradation (130) apte à acquérir une vitesse de progression de dégradation de la structure cible d'inspection en comparant une pluralité de degrés de dégradation acquis respectivement sur la base d'une pluralité d'images avec des temps d'inspection différents de la structure cible d'inspection, et
dans lequel l'unité de commande de base de données (126) est apte à stocker la vitesse de progression de dégradation dans la base de données associée aux informations de dégradation et au degré de dégradation,
**caractérisé en ce que** le dispositif de traitement d'informations comprend en outre :
une unité de recherche (128) apte à rechercher dans la base de données (30) des informations de dégradation similaires, lesquelles sont d'autres informations de dégradation similaires aux informations de dégradation de la structure cible d'inspection (1),
dans lequel dans un cas où un degré de dégradation de la structure cible d'inspection en un temps antérieur au temps d'inspection le plus récent de la structure cible d'inspection n'est pas présent dans la base de données, l'unité d'acquisition de vitesse de progression de dégradation (130) est apte à estimer une vitesse de progression de dégradation de la structure cible d'inspection à l'aide de la vitesse de progression de détérioration stockée dans la base de données (30) en association avec les informations de dégradation similaires.

2. Dispositif de traitement d'informations (10) selon la revendication 1, dans lequel ladite unité de recherche (128) est en outre apte à rechercher dans la base de données (30), où sont stockés un paramètre de progression de dégradation affectant la progression de dégradation et des informations de résultat d'inspection d'une structure autre que la structure cible d'inspection, associés entre eux, pour des informations de résultat d'inspection de l'autre structure dont le paramètre de progression de dégradation est identique à la structure cible d'inspection, ou similaire à celle-ci, dans lequel les informations de résultat de dégradation incluent au moins un élément parmi une image capturée, des informations de dégradation, un degré de dégradation, ou une vitesse de progression de dégradation, et le dispositif de traitement d'informations comprend en outre :
une unité de génération de modèle de progression (152) apte à générer un modèle de progression correspondant au paramètre de progression de dégradation de la structure cible d'inspection à l'aide des informations de résultat d'inspection de l'autre structure ayant été recherchée.

3. Dispositif de traitement d'informations (10) selon la revendication 2, dans lequel le paramètre de progression de dégradation de la structure cible d'inspection inclut au moins un élément parmi des informations d'environnement naturel sur un environnement naturel de la structure cible d'inspection, des informations de situation d'utilisation sur une situation d'utilisation de la structure cible d'inspection, des informations de structure sur une structure de la structure cible d'inspection, des informations de matériau sur un matériau de la structure cible d'inspection, des informations de médication sur une médication attribuée à la structure cible d'inspection, ou des informations de maintenance et d'enregistrement de gestion sur un enregistrement de réparation et un enregistrement de renforcement de la structure cible d'inspection.

4. Dispositif de traitement d'informations (10) selon la revendication 1, dans lequel dans un cas où un degré de dégradation de la structure cible d'inspection (1) en un temps antérieur au temps d'inspection le plus récent de la structure cible d'inspection n'est pas présent dans la base de données (30), l'unité d'acquisition de vitesse de progression de dégradation (130) est apte à estimer une vitesse de progression de dégradation de la structure cible d'inspection (1) au temps d'inspection le plus récent de la structure cible d'inspection ou au temps antérieur au temps d'inspection le plus récent à l'aide d'au moins un élément parmi la vitesse de progression de dégradation ou le degré de dégradation, associé à des informations de dégradation similaires dans la base de données.

5. Dispositif de traitement d'informations (10) selon l'une quelconque des revendications 1 à 4, dans lequel l'unité de génération d'informations de dégradation (122) est apte à générer les informations de dégradation incluant au moins un élément parmi des informations de structure hiérarchique sur une structure hiérarchique du jeu de un ou plusieurs vecteurs bidimensionnels ou des informations de direction relative sur une direction de la structure cible d'inspection et du jeu des un ou plusieurs vecteurs bidimensionnels.

6. Dispositif de traitement d'informations (10) selon la revendication 5, dans lequel l'unité de génération d'informations de dégradation (122) est apte à générer les informations de structure hiérarchiques incluant des informations sur un groupe de vecteurs auquel appartient un vecteur de dégradation du jeu de un ou plusieurs vecteurs bidimensionnels, des informations sur un autre vecteur de dégradation du jeu de un ou plusieurs vecteurs bidimensionnels reliés au un vecteur de dégradation, et des informations uniques du un vecteur de dégradation.

7. Dispositif de traitement d'informations (10) selon l'une quelconque des revendications 1 à 6, dans lequel l'unité de génération d'informations de dégradation (122) est apte à générer un vecteur en reliant une pluralité de vecteurs séparés les uns des autres dans l'espace.

8. Dispositif de traitement d'informations (10) selon l'une quelconque des revendications 1 à 7, comprenant en outre :
une unité de correction (122) apte à réaliser une association entre des positions de coordonnées et des directions des vecteurs générées respectivement à partir de la pluralité d'images en réalisant une correction géométrique sur au moins un élément parmi une pluralité d'images présentant des temps d'inspection différents ou les vecteurs générés à partir de la pluralité d'images.

9. Dispositif de traitement d'informations (10) selon l'une quelconque des revendications 1 à 8, comprenant en outre une unité de subdivision de modèle de progression (154) apte à subdiviser l'état dégradé et le degré de dégradation du modèle de progression correspondant au degré déterminé de dégradation sur la base au moins du jeu de un ou plusiseurs vecteurs bidimensionnels dans les informations de dégradation de la structure cible d'inspection (1).

10. Dispositif de traitement d'informations (10) selon l'une quelconque des revendications 1 à 9, comprenant en outre :
une unité de détermination de mesure (132) apte à déterminer des mesures quant à la dégradation de la structure cible d'inspection (1) sur la base du degré de dégradation et de la vitesse de progression de dégradation acquis sur la base des informations de dégradation sur la structure cible d'inspection.

11. Dispositif de traitement d'informations (10) selon la revendication 10, comprenant en outre :
une unité de planification de maintenance et de gestion (136) apte à générer des informations de planification pour la maintenance et la gestion incluant au moins un élément parmi la réparation ou le renforcement de la structure cible d'inspection sur la base au moins de la vitesse de progression de dégradation et des mesures.

12. Procédé de traitement d'informations, comprenant les étapes suivantes :
une étape pour extraire une dégradation à partir d'une image d'une structure cible d'inspection (1) ;
une étape pour générer des informations de dégradation incluant un jeu d'un ou plusieurs vecteurs bidimensionnels obtenus en vectorisant la dégradation ;
une étape pour acquérir un modèle de progression indiquant une relation de correspondance entre un état dégradé d'une structure de modèle et un degré de dégradation, lequel est une classification d'évaluation d'un degré de progression de dégradation, dans lequel un état dégradé d'une structure de modèle est une description géométrique d'une dégradation de structure de modèle ;
une étape pour analyser au moins le jeu d'un ou de plusieurs vecteurs bidimensionnels dans les informations de dégradation de la structure cible d'inspection (1) sur la base du un ou plusieurs états dégradés indiqués dans le modèle de progression, et déterminer un degré de détérioration de la structure cible d'inspection correspondant à l'état dégradé de la structure cible d'inspection (1) ;
une étape pour acquérir une vitesse de progression de dégradation de la structure cible d'inspection en comparant une pluralité de degrés de dégradation acquis respectivement sur la base d'une pluralité d'images avec des temps d'inspection différents de la structure cible d'inspection ;
une étape pour stocker une vitesse de progression de dégradation dans une base de données (30), associée aux informations de dégradation et au degré de dégradation de la structure cible d'inspection (1) ;
**caractérisé en ce que** le procédé de traitement d'informations comprend en outre l'étape suivante :
rechercher dans la base de données (30) des informations de dégradation similaires, lesquelles sont d'autres informations de dégradation similaires aux informations de dégradation de la structure cible d'inspection (1),
dans lequel dans un cas où un degré de dégradation de la structure cible d'inspection en un temps antérieur au temps d'inspection le plus récent de la structure cible d'inspection n'est pas présent dans la base de données, l'étape pour acquérir une vitesse de progression de dégradation estime une vitesse de progression de dégradation de la structure cible d'inspection à l'aide de la vitesse de progression de détérioration stockée dans la base de données associée aux informations de dégradation similaires.
